# EUROPÄISCHE PATENTSCHRIFT

(11) **EP 0 582 615 B1**
(45) Veröffentlichungstag und Bekanntmachung des Hinweises auf die Patenterteilung: **28.06.1995**
(21) Anmeldenummer: 92909286.4
(22) Anmeldetag: 23.04.1992
(51) Int. Cl.: C08G 77/26, C08G 73/12

(54) **POLYIMIDSILOXANE, DIE ZUSÄTZLICH ESTER- UND/ODER AMIDGRUPPEN AUFWEISEN**
POLYIMIDE SILOXANES WHICH ALSO INCLUDE ESTER AND/OR AMIDE GROUPS
SILOXANES DE POLYIMIDES COMPORTANT EGALEMENT DES GROUPES ESTER ET/OU AMIDE

(30) Priorität: 25.04.1991 DE 4113586
(43) Veröffentlichungstag der Anmeldung: 16.02.1994
(73) Patentinhaber: Consortium für elektrochemische Industrie GmbH, D-81379 München (DE)
(72) Erfinder: FUNK, Enno, D-8263 Burghausen (DE)
(86) Internationale Anmeldenummer: EP9200901
(87) Internationale Veröffentlichungsnummer: WO9219668

(56) Entgegenhaltungen:
- EP-A- 0 328 028
- EP-A- 0 402 674
- EP-A-02 955 561
- DE-A- 2 543 919

## Beschreibung

Die Erfindung betrifft Polyimidsiloxane, die zusätzlich Ester- und/oder Amidgruppen aufweisen, Verfahren zu deren Herstellung sowie deren Verwendung. Der Begriff Polyimidsiloxane, die zusätzlich Ester- und/oder Amidgruppen aufweisen, soll der Einfachheit halber auch die Polymere umfassen, die als siliciumfunktionelle Einheiten Silcarbane enthalten.

Vollaromatische Polyesterimide wurden erstmals beschrieben von D.F. Loncrini im Journal of Polymer Science: Part A-1 Vol. 4, 1531 - 1541 (1966). S. Hara, K. Iwata und T. Yamada berichten in der Zeitschrift "Die Makromolekulare Chemie" 176, 127 - 141 (1975) über Harze, die durch radikalische Polymerisation von Ester-Imiden mit Allylimid-Funktion hergestellt wurden. Copolymere aus Ester-Imid-Blöcken und aliphatischen Kohlenwasserstoffketten wurden von H.R. Kricheldorf und R. Pakull in Makromolekules 21, 551 (1988) beschrieben.

Organopolysiloxane sind von großem Interesse, da sie eine hohe thermooxidative Beständigkeit und extreme Kälteflexibilität sowie eine geringe Temperaturabhängigkeit ihrer physikalischen Konstanten aufweisen. In ihren mechanischen Eigenschaften, wie der Zug-, Weiterreiß- und Abziehfestigkeit sind sie meist jedoch organischen Polymeren unterlegen. Um diesen Nachteil zu vermeiden, wurden Versuche unternommen, Organopolysiloxane mit organischen Verbindungen zu modifizieren. Bei den organischen Verbindungen handelt es sich dabei insbesondere um solche Verbindungen, die aromatische oder heterozyklische Strukturelemente enthalten oder über funktionelle Gruppen, wie Ester-, Amid- und Imidreste verfügen. Hierzu sei beispielsweise auf DE-PS 25 43 919 (M. Bargain, Rhone-Poulenc Ind.; ausgegeben am 27. Mai 1987) bzw. den entsprechenden US-PS 4,088,670 (ausgegeben am 9. Mai 1987), US-PS 4,147,711 (ausgegeben am 3. April 1979), US-PS 4,213,914 (ausgegeben am 23. Juli 1980) und US-PS 4,275,184 (ausgegeben am 23. Juni 1981) verwiesen, in denen Siloxancopolymere mit aromatischen Ester- bzw. Amidgruppen offenbart sind. Des weiteren werden in US-PS 3,847,867 (D.R. Heath, General Electric Company; ausgegeben am 12. November 1974) Poly(etherimid-siloxane) beschrieben. In EP-A 402674 (C.M. Hawkins, General Electric Company; ausgegeben am 19. Dezember 1990) wird ein Verfahren zur Herstellung von Polycarbonat-Silicon-Blockcopolymeren beschrieben, wobei ein aromatisches Polycarbonatharz mit einem Polydiorganosiloxan mit mindestens einer Carbonsäuregruppe umgesetzt wird. In EP-OS 295 561 (General Electric Company; ausgegeben am 21. Dezember 1988), WO 89/05332 (General Electric Company; ausgegeben am 15. Juni 1989) und EP-OS 328 028 (Occidental Chemical Corporation; ausgegeben am 16.8.1989) werden Poly(etherimid-siloxane) beschrieben. Beispielhaft für Poly(imid-siloxane) sei hier H. Kuckertz, Makromol. Chem. 98 (1966) 101-8 genannt. Zahlreiche weitere Versuche zur Modifikation von Polysiloxanen mit organischen Verbindungen sind bekannt. Hierzu sei des weiteren M. Wick, G. Kreis und F.-H. Kreuzer in Ullmanns Encyklopädie der technischen Chemie, Verlag Chemie, Weinheim, 4. Aufl., 1982, Bd. 21, Seite 532 ff genannt.

Es bestand die Aufgabe, modifizierte Organopolysiloxane mit thermoplastischen Eigenschaften bereitzustellen. Diese Aufgabe wird durch die Erfindung gelöst.

Gegenstand der Erfindung sind Polyimidsiloxane, die zusätzlich Ester- und/oder Amidgruppen aufweisen, dadurch gekennzeichnet, daß sie Einheiten der Formel 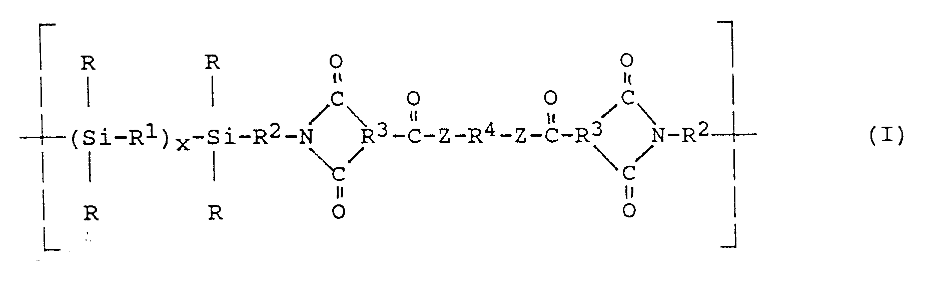
enthalten, worin
- R: gleich oder verschieden sein kann und einwertige, gegebenenfalls substituierte, von aliphatischer Mehrfachbindung freie, SiC-gebundene organische Reste bedeutet,
- R¹: gleich oder verschieden sein kann und Sauerstoffatom oder zweiwertige, gegebenenfalls substituierte, von aliphatischer Mehrfachbindung freie SiC-gebundene organische Reste bedeutet,
- R²: gleich oder verschieden sein kann und zweiwertige, gegebenenfalls substituierte organische Reste bedeutet,
- R³: gleich oder verschieden sein kann und dreiwertige, gegebenenfalls substituierte organische Reste bedeutet,
- R⁴: gleich oder verschieden sein kann und zweiwertige, gegebenenfalls substituierte organische Reste bedeutet,
- Z: gleich oder verschieden sein kann und Sauerstoffatom oder einen Rest 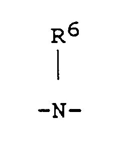 bedeutet, mit R⁶ gleich Wasserstoffatom oder einwertigem organischen Rest,
- x: eine Zahl von 1 bis 200, bevorzugt 2 bis 50, besonders bevorzugt 3 bis 20,
bedeutet.

Bevorzugt als Reste R sind Kohlenwasserstoffreste mit 1 bis 12 Kohlenstoffatomen, die gegebenenfalls durch Halogenatome, Ethergruppen, Estergruppen, Epoxygruppen oder Cyanogruppen substituiert sind.

Beispiele für Kohlenwasserstoffreste R sind Alkylreste, wie der Methyl-, Ethyl-, n-Propyl-, iso-Propyl-, 1-n-Butyl, 2-n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest; Cycloalkylreste, wie Cyclopentyl-, Cyclohexyl-, Cycloheptylreste und Methylcyclohexylreste; Arylreste, wie der Phenyl- und der Naphthylrest; Alkarylreste, wie o-, m-, p-Tolylreste, Xylylreste und Ethylphenylreste und Aralkylreste, wie der Benzylrest, der α- und der β-Phenylethylrest.

Beispiele für substituierte Kohlenwasserstoffreste R sind Cyanalkylreste, wie der β-Cyanethylrest, und halogenierte Kohlenwasserstoffreste, beispielsweise Halogenalkylreste, wie der 3,3,3-Trifluor-n-propylrest, der 2,2,2,2',2',2'-Hexafluorisopropylrest, der Heptafluorisopropylrest, und Halogenarylreste, wie der o-, m-, und p-Chlorphenylrest.

Besonders bevorzugt als Reste R sind der Methyl-, Ethyl-3,3,3-Trifluor-n-propyl- und der Phenylrest.

Bei den Resten R¹ handelt es sich besonders bevorzugt um Sauerstoffatom.

Handelt es sich bei dem Rest R¹ aber um zweiwertige SiC-gebundene Reste, dann sind Kohlenwasserstoffreste mit 1 bis 30 Kohlenstoffatom(en), die durch Ethersauerstoffatome substituiert sein können, wie beispielsweise Oligooxymethylen- oder Oligooxyethylengruppen, bevorzugt.

Bevorzugt als Reste R² sind zweiwertige, gegebenenfalls substituierte Kohlenwasserstoffreste mit 3 bis 11 Kohlenstoffatomen.

Beispiele für Reste R² sind Alkylenreste, wie der n-Propylen-, iso-Propylen-, 1-n-Butylen-, 2-n-Butylen-, iso-Butylen-, tert.-Butylen-, n-Pentylen-, iso-Pentylen-, neo-Pentylen-, tert.-Pentylenrest, Hexylenreste, wie der n-Hexylenrest, Heptylenreste, wie der n-Heptylenrest, Octylenreste, wie der n-Octylenrest und iso-Octylenreste, wie der 2,2,4-Trimethylpentylenrest, Nonylenreste, wie der n-Nonylenrest und Decylenreste, wie der n-Decylenrest, sowie Cycloalkylenreste, wie Cyclopentylen-, Cyclohexylen-, Cycloheptylenreste und Methylcyclohexylenreste.

Beispiele für substituierte Reste R² sind Cyanalkylenreste, wie der β-Cyanethylenrest, und halogenierte Kohlenwasserstoffreste, beispielsweise Halogenalkylenreste, wie der 3,3,3-Trifluor-n-propylenrest, der 2,2,2,2',2',2'-Hexafluorisopropylenrest, und Halogenarylenreste, wie der o-, m-, und p-Chlorphenylenrest sowie gegebenenfalls substituierte m-oder p-Propyloxyphenylreste.

Besonders bevorzugt als Reste R² sind lineare Alkylenreste mit 3 bis 6 Kohlenstoffatomen, insbesondere der 1,3-Propylenrest.

Bei Rest R³ handelt es sich bevorzugt um dreiwertige, aromatische Kohlenwasserstoffe, besonders bevorzugt um solche mit 6 bis 12 Kohlenstoffatomen, insbesondere um 1,2,4-Benzoltriyl.

Beispiele für den Rest R³ sind 1,2,4-Benzoltriyl-, 3,4,4'-Biphenyltriyl-, 3,4,3'-Biphenyltriyl-, 1,4,8-Naphthalintriyl-, 1,2,6-Naphthalintriyl- und 2,3,6-Antrachinontriylrest.

Bei Rest R⁴ handelt es sich bevorzugt um zweiwertige, aromatische oder araliphatische Kohlenwasserstoffreste, die durch Halogenatome, Ethergruppen, Estergruppen oder Cyanogruppen substituiert sein können, wobei solche mit 6 bis 20 Kohlenstoffatomen als Rest R⁴ besonders bevorzugt sind.

Beispiele für Reste R⁴ sind der 1,4-Phenylen-, 1,3-Phenylen-, 4,4'-Biphenylen-, 3,3'-Biphenylen-, 3,4'-Biphenylen-, 1,4-Naphthalindiyl-, 1,5-Naphthalindiyl-, 1,4-Anthrachinondiyl-, 1,5-Anthrachinondiyl-, 2,6-Anthrachinondiyl-, Diphenylmethan-4,4'-diyl-, 2,2-Bisphenylpropan-4,4'-diyl-, 2,2-Bisphenylperfluorpropan-4,4'-diyl-, 3,3-Bisphenylphthalid-4,4'-diyl- und Bisphenylsulfon-4,4'-diylrest sowie der 2-Methyl-1,4-phenylen-, 2-Chlor-1,4-phenylen-, 2-Phenyl-1,4-phenylen-, 2-Cyano-1,4-phenylen-, 2,2'-Dimethyl-4,4'-biphenylen- und 3,3'-Dimethyl-4,4'-biphenylenrest.

Insbesondere handelt es sich bei Rest R⁴ um 1,4-Phenylen, 1,3-Phenylen, 4,4'-Biphenylen, 2,2-Diphenylpropan-4,4'-diyl, 2,2-Bisphenylperfluorpropan-4,4'-diyl, 2-Methyl-1,4-phenylen, 2-Phenyl-1,4-phenylen und 3,3-Bisphenylphthalid-4,4'-diyl.

Bevorzugt handelt es sich bei Rest R⁶ um Wasserstoffatom und Kohlenwasserstoffreste mit 1 bis 20 Kohlenstoffatomen, besonders bevorzugt um Wasserstoffatom und Kohlenwasserstoffreste mit 1 bis 3 Kohlenstoffatomen, wie der Methyl-, Ethyl-, n-Propyl- und iso-Propylrest.

Beispiele für Reste R⁶ sind die für R angegebenen Reste.

Obwohl in Formel (I) nicht angegeben, können bis zu 20 Prozent der Diorganosiloxaneinheiten durch R₃SiO_{1/2}-, RSiO_{3/2}- und SiO_{4/2}-Einheiten ersetzt sein, wobei R die vorstehend dafür angegebene Bedeutung hat.

Die erfindungsgemäßen, Ester- und/oder Amidgruppen aufweisenden Polyimidsiloxane bestehen vorzugsweise aus durchschnittlich 2 bis 500, besonders bevorzugt 10 bis 200, Einheiten gemäß Formel (I), wobei die wiederkehrenden Einheiten gemäß Formel (I) gleich oder verschieden sein können.

Die erfindungsgemäßen, Ester- und/oder Amidgruppen aufweisenden Polyimidsiloxane haben ein Molekulargewicht vorzugsweise zwischen 5000 und 500000, besonders bevorzugt zwischen 15000 und 200000.

Die erfindungsgemäßen Ester- und/oder Amidgruppen aufweisenden Polyimidsiloxane lassen sich nach an sich bekannten Verfahren herstellen. Vorzugsweise werden die erfindungsgemäßen Ester- und/oder Amidgruppen aufweisenden Polyimidsiloxane durch Umsetzung von Ester- und/oder Amidgruppen aufweisenden α,ω-Dialkenylimiden mit zwei Si-gebundene Wasserstoffatome aufweisender Organosiliciumverbindung in Gegenwart eines die Anlagerung von Si-gebundenem Wasserstoff an aliphatische Mehrfachbindung fördernden Katalysators hergestellt.

Bei den im erfindungsgemäßen verfahren eingesetzten Ester- und/oder Amidgruppen aufweisenden α,ω-Dialkenylimiden handelt es sich um solche der Formel 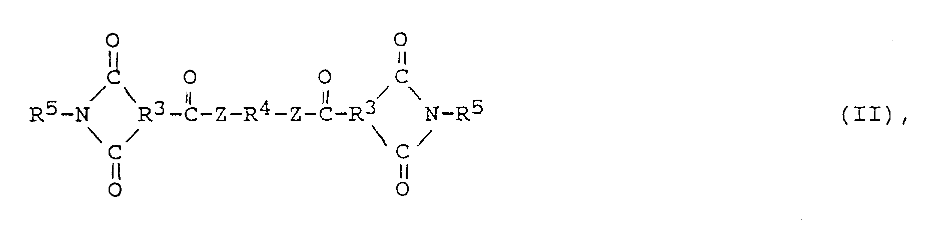
worin R³, R⁴ und Z eine der obengenannten Bedeutungen haben, und R⁵ gleich oder verschieden sein kann und einen einwertigen, gegebenenfalls substituierten organischen Rest mit endständiger Kohlenstoff-Kohlenstoff-Doppelbindung bedeutet.

Bevorzugt sind als Rest R⁵ einwertige, gegebenenfalls substituierte Kohlenwasserstoffreste mit 2 bis 20 Kohlenstoffatomen, die eine endständige aliphatische Kohlenstoff-Kohlenstoff-Doppelbindung aufweisen.

Beispiele für Rest R⁵ sind der Vinylrest, Allylrest, n-But-3-enylrest, n-Hex-5-enylrest, n-Undec-10-enylrest, 3-Allyloxyphenylrest, 4-Allyloxyphenylrest, 4-Allyloxy-2-methylphenylrest, 4-Allyloxybenzylrest und 4-Allyloxy-phenoxyphenylrest.

Bevorzugt handelt es sich bei Rest R⁵ um Allylrest, n-But-3-enylrest, n-Hex-5-enylrest, n-Undec-10-enylrest, 3-Allyloxyphenylrest, 4-Allyloxyphenylrest und 4-Allyloxy-2-methylphenylrest, wobei R⁵ besonders bevorzugt Allylrest bedeutet.

Beispiele für die im erfindungsgemäßen Verfahren eingesetzten Ester- und/oder Amidgruppen aufweisenden α,ω-Dialkenylimide der Formel (II) sind 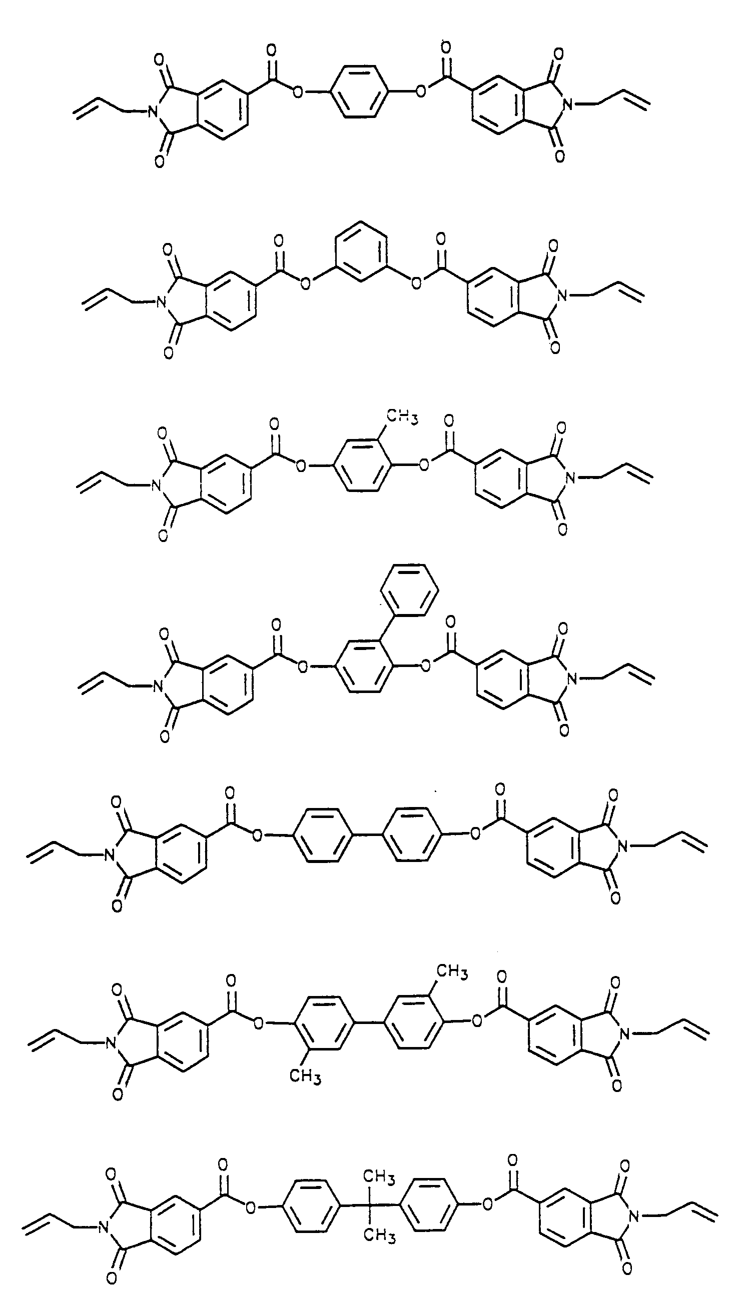 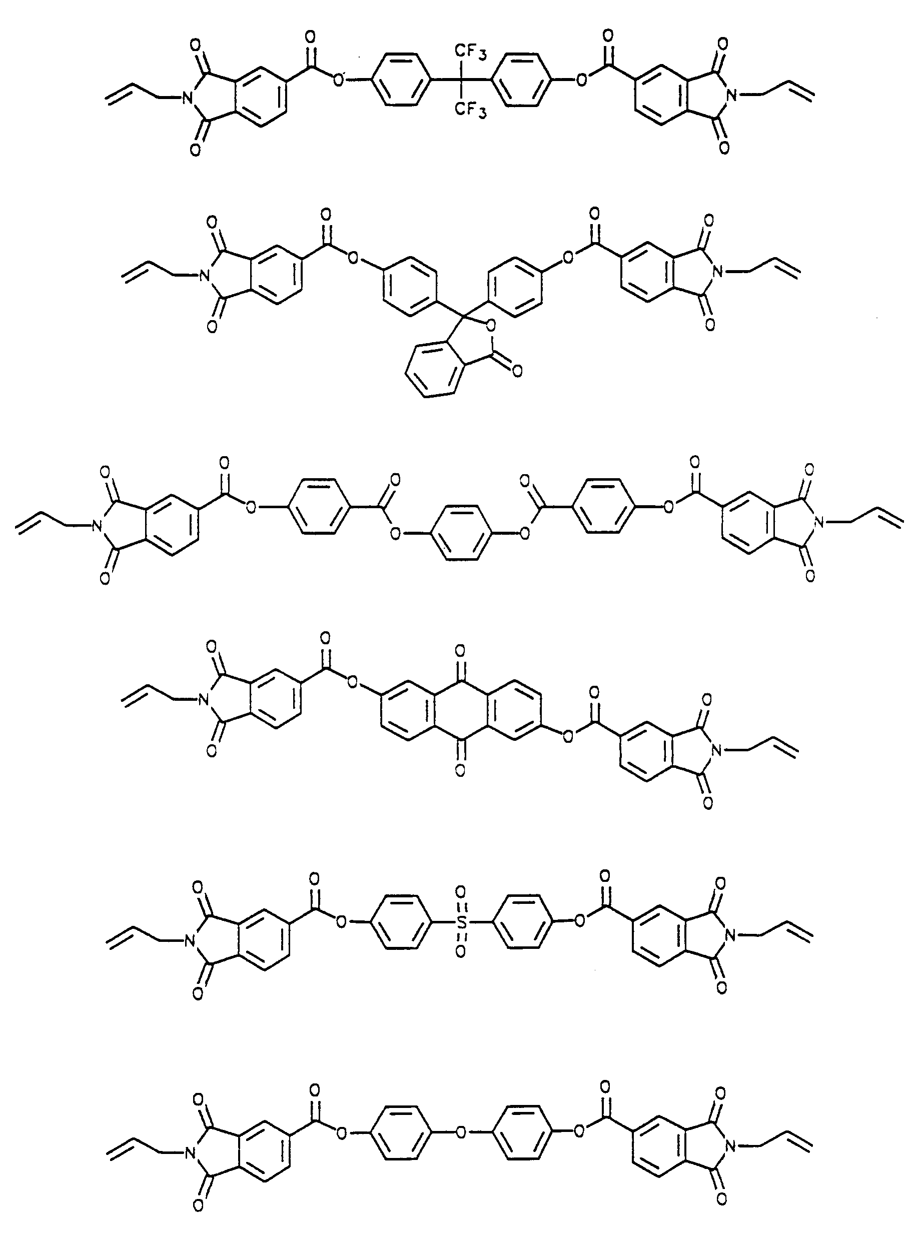 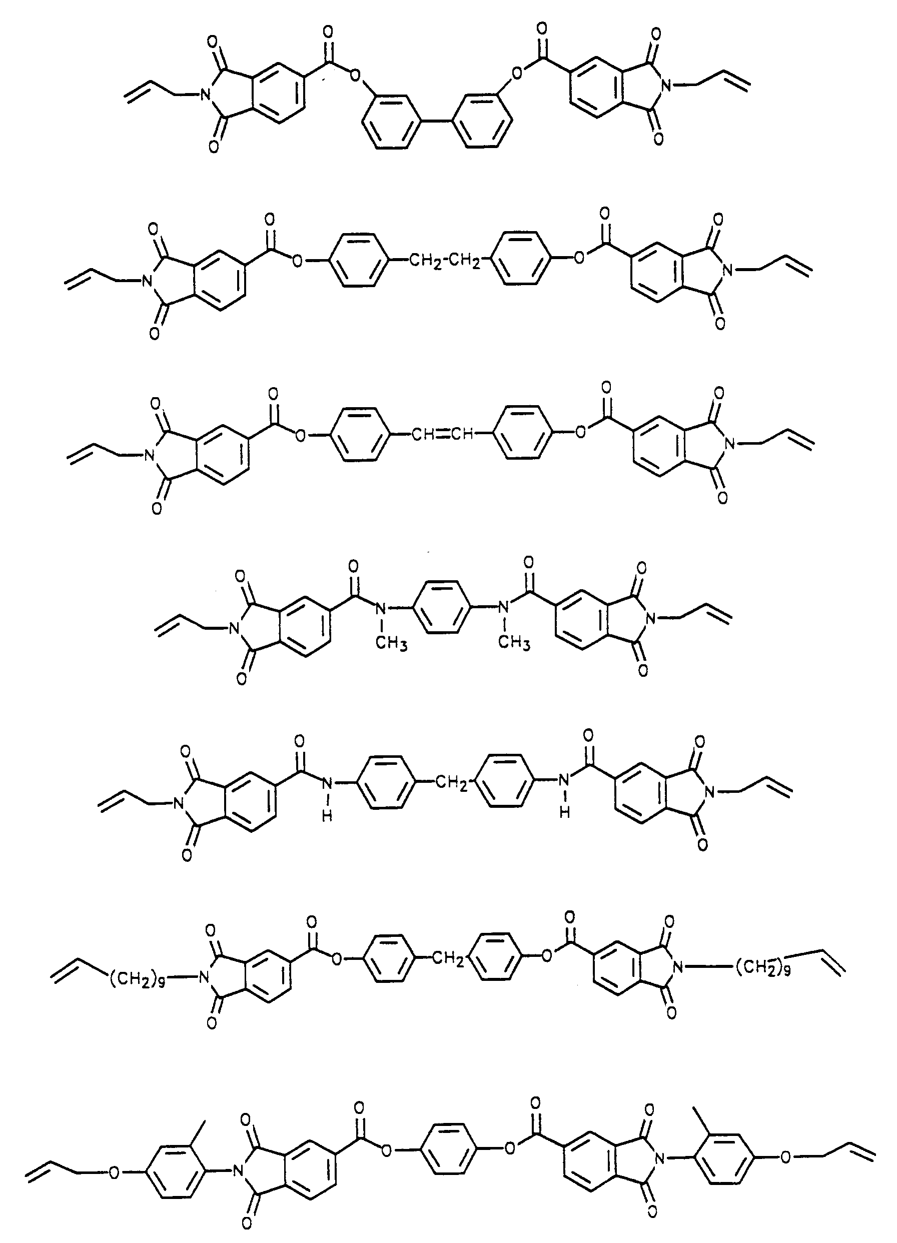
1,4-Bis-(N-allyl-4-phthalimidcarbamoyl)-benzol, 1,4-Bis-(N-allyl-4-phthalimid-N-methylcarbamoyl)-benzol, 1,3-Bis-(N-allyl-4-phthalimidcarbamoyl)-benzol und 4,4'-Bis-(N-allyl-4-phthalimidcarbamoyl)-diphenylether.

Bei den erfindungsgemäß eingesetzten Ester- und/oder Amidgruppen aufweisenden α,ω-Dialkenylimiden kann es sich um eine einzelne Art von Ester- und/oder Amidgruppen aufweisenden α,ω-Dialkenylimiden handeln. Es kann sich aber auch um ein Gemisch aus mindestens zwei verschiedenen Arten derartiger Ester- und/oder Amidgruppen aufweisenden α,ω-Dialkenylimiden handeln.

Die im erfindungsgemäßen Verfahren eingesetzten Ester- und/oder Amidgruppen aufweisenden α,ω-Dialkenylimide können nach an sich bekannten Verfahren hergestellt werden. Beispielsweise können Ester- und/oder Amidgruppen aufweisende α,ω-Dialkenylimide durch Umsetzung von zwei Mol Trimellitsäureanhydrid mit einer aromatischen Diacetoxyverbindung und anschließender Kondensationsreaktion des erhaltenen Dianhydrids mit zwei Mol Alkenylamin hergestellt werden. Hierzu sei zum Beispiel auf D.F. Locrini und J.M. Witzel, Proceedings of the 6th Electrical Insulation Conference, Paper 32, 82-4 (1965), US-PS 4,121,001 (Raychem Corp.; ausgegeben am 17.Oktober 1978) bzw. der entsprechenden DE-OS 2801450 und US-PS 4,212,880 (Merck & Co. Inc.; ausgegeben am 16. Juli 1980) verwiesen.

Des weiteren können Ester- und/oder Amidgruppen aufweisende α,ω-Dialkenylimide durch Umsetzung von aromatischen Dihydroxyverbindungen (1) bzw. aromatischen Diaminen (2) mit zwei Äquivalenten Alkenylgruppen enthaltenden Carbonsäurederivaten, bevorzugt Alkenylgruppen enthaltenden, aromatischen Carbonsäurederivaten, wie beispielsweise N-ω-Alkenyl-4-phthalimidcarbonylchlorid oder -anhydrid sowie analoge Imide von 3,4,4'-Biphenyltricarbonsäurederivaten, 3,4,3'-Biphenyltricarbonsäurederivaten, 1,4,8-Naphthalintricarbonsäurederivaten und 2,3,6-Anthrachinontricarbonsäurederivaten hergestellt werden. N-ω-Alkenyl-4-phthalimidcarbonylchlorid ist bereits in S. Hara, K.Iwata und T. Yamada, Makromol. Chem. 176, 127 (1975) beschrieben.

Beispiele für aromatische Dihydroxyverbindungen (1) sind Hydrochinon, Resorcin, 2-Methylhydrochinon, 2-Methoxyhydrochinon, 2-Chlorhydrochinon, Hydrochinon-2-carbonsäureethylester, 2,5-Dihydroxybiphenyl, 3,3'-Dihydroxybiphenyl, 4,4'-Dihydroxybiphenyl, 2,2'-Dimethyl-4,4'-dihydroxybiphenyl, 3,3'-Dimethyl-4,4'-dihydroxybiphenyl, 2,2-Bis-(4-hydroxyphenyl)-propan, Bis-(4-hydroxyphenyl)-methan, 1,2-Bis-(4-hydroxyphenyl)-ethan, 1,2-Bis-(3-hydroxyphenoxy)-ethan, 2,2-Bis-(4-hydroxyphenyl)-perfluorpropan, Bis-(4-hydroxyphenyl)-sulfon, 3,3-Bis-(4-hydroxyphenyl)-phthalid, Bis-(4-hydroxyphenyl)-ether, 1,5-Dihydroxynaphthalin, 2,6-Dihydroxynaphthalin, 4,4'-Dihydroxybenzophenon, 1,5-Dihydroxyanthrachinon, 2,6-Dihydroxyanthrachinon, 1,2-Bis-(4-hydroxyphenyl)-trans-ethen, 1,4-Bis-(4-hydroxybenzoyl)-benzol, wobei Hydrochinon, 4,4'-Dihydroxybiphenyl, 2,2-Bis-(4-hydroxyphenyl)-propan, 2,2-Bis-4-hydroxyphenyl)-perfluorpropan und 1,4-Bis-(4-hydroxybenzoyl)-benzol bevorzugt und Hydrochinon und 2,2-Bis-(4-hydroxyphenyl)-propan besonders bevorzugt sind.

Beispiele für aromatische Diamine (2) sind 1,4-Phenylendiamin, 1,3-Phenylendiamin, 1,4-Bis-(methylamino)-benzol, 4,4'-Bis-(aminophenyl)-methan, wobei 4,4'-Bis-(aminophenyl)-methan bevorzugt ist.

Vorteilhafterweise wird die Umsetzung von aromatischen Dihydroxyverbindungen (1) bzw. aromatischen Diaminen (2) mit N-ω-Alkenyl-4-phthalimidcarbonylchlorid oder -anhydrid in Anwesenheit von Base (3) und in bezug auf die Reaktionsteilnehmer inertem organischen Lösungsmittel durchgeführt. Gegebenenfalls kann die Reaktion in Anwesenheit eines Phasen-Transfer-Katalysators, wie beispielsweise 18-Krone-6, durchgeführt werden.

Beispiele für solche Lösungsmittel sind Toluol, Xylol, Anisol, Veratrol, Tetrahydrofuran, Dioxan, 1,2-Dimethoxyethan, tert.-Butylmethylether, Diethylether, Methylenchlorid, Chloroform, Aceton, Ethylmethylketon und Pyridin, wobei Toluol, Anisol, tert.-Butylmethylether, Aceton und Pyridin besonders bevorzugt sind.

Beispiele für Basen (3) sind organische Aminbasen, wie beispielsweise Pyridin, 4-Dimethylaminopyridin, Triethylamin, Ethyldiisopropylamin und 1,8-Diazabicyclo(5.4.0)undec-7-en sowie anorganische Basen wie Natriumcarbonat, Kaliumcarbonat, Natriumhydrogencarbonat, Natriumhydroxid, Kaliumhydroxid und Natriumhydrid, wobei Pyridin, Triethylamin und Kaliumcarbonat bevorzugt sind.

Wird die Umsetzung von aromatischen Dihydroxyverbindungen (1) bzw. aromatischen Diaminen (2) mit N-ω-Alkenyl-4-phthalimidcarbonylchlorid nicht in Anwesenheit von Base (3) durchgeführt, wird vorzugsweise der entstehende Chlorwasserstoff in einem nachgeschalteten Gaswäscher neutralisiert.

Die Umsetzung von aromatischen Dihydroxyverbindungen (1) bzw. aromatischen Aminen (2) mit N-ω-Alkenyl-4-phthalimidcarbonylchlorid oder -anhydrid in wässriger Lösung ist ebenfalls durchführbar.

Falls N-ω-Alkenyl-4-phthalimidcarbonsäure eingesetzt wird, kann die Umsetzung auch azeotrop unter Säurekatalyse durchgeführt werden.

Die Umsetzung von aromatischen Dihydroxyverbindungen (1) bzw. aromatischen Aminen (2) mit N-ω-Alkenyl-4-phthalimidcarbonylchlorid oder -anhydrid wird bei einer Temperatur von vorzugsweise -10 und 150 °C und einem Druck von 500 bis 2000 hPa, besonders bevorzugt bei einer Temperatur von 10 bis 30 °C und einem Druck von 900 bis 1100 hPa durchgeführt.

Bei der im erfindungsgemäßen Verfahren eingesetzten zwei Sigebundene Wasserstoffatome aufweisenden Organosiliciumverbindung handelt es sich um solche der Formel 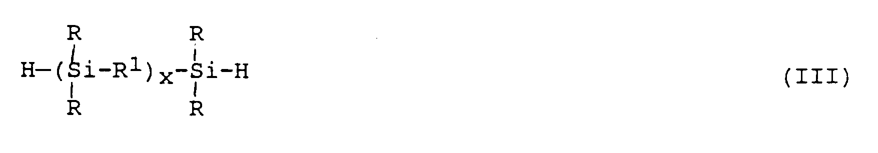
worin
R, R¹ und x eine der oben dafür angegebene Bedeutung haben.

Obwohl in Formel (III) nicht angegeben, können bis zu 20 Prozent der Diorganosiloxaneinheiten durch R₃SiO_{1/2}-, RSiO_{3/2}- und SiO_{4/2}-Einheiten ersetzt sein, wobei R die vorstehend dafür angegebene Bedeutung hat.

Beispiele für die im erfindungsgemäßen Verfahren eingesetzten zwei Si-gebundene Wasserstoffatome aufweisenden Organosiliciumverbindung sind
H-[Si(CH₃)₂-O]₄-Si(CH₃)₂-H
H-[Si(CH₃)₂-O]₉-Si(CH₃)₂-H
H-Si(CH₃)₂-O-[Si(CH₃)(C₆H₅)-O]₁₅-Si(CH₃)₂-H
H-Si(CH₃)₂-O-[Si(CH₃)(C₈H₁₇)-O]₁₈-Si(CH₃)₂-H
H-Si(CH₃)₂-O-[Si(C₂H₅)₂-O]₁₀-Si(CH₃)₂-H
H-Si(CH₃)₂-O-([Si(CH₃)₂-O][Si(CH₃)(C₆H₅)-O])₈-Si(CH₃)₂-H 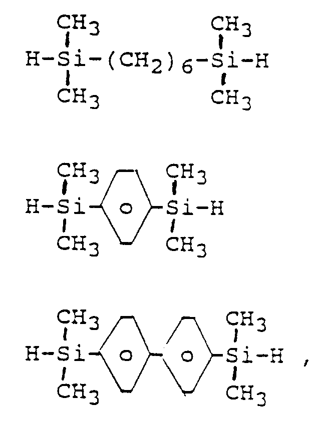
wobei CH₃ Methyl-, C₂H₅ Ethyl-, C₆H₅ Phenyl- und C₈H₁₇ Isooctylrest bedeutet.

Des weiteren können in erfindungsgemäßen Verfahren auch cyclische Organopolysiloxane mit zwei Si-gebundenen Wasserstoffatomen eingesetzt werden.

Die Viskosität der im erfindungsgemäßen Verfahren eingesetzten zwei Si-gebundene Wasserstoffatome aufweisenden Organosiliciumverbindung liegt vorzugsweise zwischen 0,7 und 200 mm²/s, besonders bevorzugt zwischen 1 und 50 mm²/s.

Besonders bevorzugt werden bei dem erfindungsgemäßen Verfahren als Organosiliciumverbindung mit zwei Si-gebundenen Wasserstoffatomen α,ω-Dihydrogendiorganopolysiloxane, insbesondere α,ω-Dihydrogendimethylpolysiloxane, mit 3 bis 20 Siliciumatomen eingesetzt.

Die erfindungsgemäß eingesetzten Organosiliciumverbindungen mit zwei Si-gebundenen Wasserstoffatomen sind handelsübliche Produkte bzw. nach in der Siliciumchemie gängigen Methoden herstellbar. Hierzu sei zum Beispiel auf W. Noll, "Chemistry and Technology of Silicones", Academic Press, Orlando, 1968, Seite 191 ff und M. Wick, G. Kreis, F.-H. Kreuzer, "Silicone", in "Ullmanns Encyklopädie der technischen Chemie", Verlag Chemie, Weinheim, 4. Aufl., 1982, Bd. 21, Seite 511 ff verwiesen.

Längerkettige α,ω-Dihydrogensiloxane können durch Cohydrolyse von Chlordiorganosiloxanen und Dichlordiorganosiloxanen, durch kationische Polymerisation von Octaorganocyclotetrasiloxanen in Gegenwart von 1,3-Dihydrogentetraalkyldisiloxan oder durch Äquilibrierung von langkettingen OH-terminierten Diorganopolysiloxanen, oder Octaorganocyclotetrasiloxanen, mit 1,3-Dihydrogentetraalkyldisiloxan in Gegenwart saurer Katalysatoren wie PNCl₂, oder saurer Ionenaustauscher, wie Amberlyst 15 oder Amberlyst XN-1010 (jeweils wasserfreie Form), hergestellt werden.

Bei der erfindungsgemäß eingesetzten zwei Si-gebundene Wasserstoffatome aufweisenden Organosiliciumverbindung kann es sich um eine einzelne Art von zwei Si-gebundene Wasserstoffatome aufweisender Organosiliciumverbindung handeln. Es kann sich aber auch um ein Gemisch aus mindestens zwei verschiedenen Arten derartiger Organosiliciumverbindungen handeln.

Bei dem erfindungsgemäßen Verfahren liegt das Molverhältnis von Ester- und/oder Amidgruppen aufweisenden α,ω-Dialkenylimiden zu Organosiliciumverbindung mit zwei Si-gebundenen Wasserstoffatomen in der Reaktionsmasse vorzugsweise zwischen 1:0,7 und 1:1,3, besonders bevorzugt bei 1:1. Weicht das Molverhältnis von Ester- und/oder Amidgruppen aufweisenden α,ω-Dialkenylimiden zu Organosiliciumverbindung mit zwei Si-gebundenen Wasserstoffatomen deutlich von 1:1 ab, wie beispielsweise 1:0,7 oder 1:1,3, werden sogenannte Präpolymere erhalten, die als Endgruppen jeweils nur die im Überschuß eingesetzte Komponente aufweisen.

Die eingesetzten Katalysatoren können im Rahmen des erfindungsgemäßen Verfahrens die gleichen sein, die auch bisher zum Anlagern von Si-gebundenen Wasserstoffatomen an aliphatische Mehrfachbindungen eingesetzt wurden. Es handelt sich dabei hauptsächlich um Metalle der 8. Nebengruppe und um deren anorganische und organische Verbindungen, wobei Platin und dessen Verbindungen bevorzugt werden.

Beispiele für solche Katalysatoren sind auf einem inerten Träger, wie Aktivkohle, SiO₂ oder Al₂O₃, abgeschiedenes, feinverteiltes elementares Platin gemäß US-PS 2,970,150 (D.L. Bailey, Union Carbide Corporation; ausgegeben am 31. Januar 1961), Hexachloroplatinsäure gemäß US-PS 2,823,218 (J.L. Speier, Dow Corning Corporation; ausgegeben am 11. Februar 1958) und davon abgeleitete Chloroplatinate, Platinkomplexe des Typs L·PtCl₂, wobei L ein lineares oder cyclisches Monoolefin, wie Ethen, Propen und Cyclohexen, bedeutet, gemäß US-PS 3,159,601 und US-PS 3,159,662 (Bruce A. Ashby , General Electric Company; jeweils ausgegeben am 1. Dezember 1964), Platinkomplexe des Typs L·PtCl₂, wobei L ein cyclisches Diolefin, wie 1,5-Cyclooctadien, Norbornadien und Cyclopentadien, bedeutet, gemäß JP-OS 79/76,529 und JP-OS 79/76,530 (Masatoshi Arai, Shin-Etsu Chemical Industry Co., Ltd.; jeweils ausgegeben am 19. Juni 1979) und US-PS 4,276,252 (G. Kreis, Wacker-Chemie GmbH, ausgegeben am 30. Juni 1981) oder ein cyclisches Polyolefin bedeutet gemäß der deutschen Anmeldung mit dem Aktenzeichen P 39 06 514.6 (G. Wenski, Consortium für elektrochemische Industrie GmbH; angemeldet am 1. März 1989), Platinvinylsiloxankomplexe gemäß US-PS 3,814,730 (B.D. Karstedt, General Electric Company; ausgegeben am 4. Juni 1974) und Acetylacetonatkomplexe des Platins gemäß US-PS 4,177,341 (G. Kreis, Consortium für elektrochemische Industrie GmbH; ausgegeben am 4. Dezember 1979).

Bei dem erfindungsgemäßen Verfahren werden wegen deren hohen Wirksamkeit besonders bevorzugt Platinkomplexe des Typs L·PtCl₂, wobei L ein cyclisches Di- oder Polyolefin bedeutet, insbesondere Dicyclopentadien-Platindichlorid, eingesetzt.

Bei dem erfindungsgemäß eingesetzten Katalysator kann es sich um eine einzelne Art von Katalysator wie auch um ein Gemisch aus mindestens zwei verschiedenen Arten derartiger Katalysatoren handeln.

Die im Rahmen des erfindungsgemäßen Verfahrens eingesetzten Mengen an Katalysator können die gleichen sein wie bei den bisher bekannten Verfahren zum Anlagern von Si-gebundenem Wasserstoff an aliphatische Mehrfachbindung in Gegenwart von Katalysator. Es sind dies vorzugsweise 0,1 bis 1000 Gewichts-ppm, besonders bevorzugt 5 bis 150 Gewichts-ppm, jeweils berechnet als elementares Platin, bezogen auf das Gesamtgewicht der Reaktionsmasse. Bei Platinkomplexen des Typs L·PtCl₂, wobei L ein cyclisches Di- oder Polyolefin bedeutet, insbesondere Dicyclopentadien-Platindichlorid, als Katalysator sind Konzentrationen zwischen 20 und 100 Gewichts-ppm, berechnet als elementares Platin, bezogen auf das Gesamtgewicht der Reaktionsmasse, völlig ausreichend.

Das erfindungsgemäße Verfahren kann in Anwesenheit oder in Abwesenheit von Lösungsmittel durchgeführt werden, wobei die Bezeichnung Lösungsmittel nicht bedeutet, daß sich alle Reaktionskomponenten in diesen lösen müssen. Die Reaktion kann auch in Emulsion oder Suspension eines oder mehrerer Reaktionspartner durchgeführt werden.

Bei dem erfindungsgemäßen Verfahren ist die Verwendung von in bezug auf die Reaktionsmasse inertem organischen Lösungsmittel, insbesondere von solchem Lösungsmittel, in welchem sich das erfindungsgemäß hergestellte, Ester- und/oder Amidgruppen aufweisenede Polyimidsiloxan mindestens zu einem Teil, bevorzugt vollständig, löst, bevorzugt.

Beispiele für Lösungsmittel sind Alkohole, wie Methanol, Ethanol, n-Propanol, iso-Propanol, n-, sec.- und tert.-Butanol und 2-Butanol; Ester, wie Methylacetat, Ethylacetat, n-und iso-Propylacetat, n-, sec.- und tert.-Butylacetat, Ethylformiat und Diethylcarbonat; Ether, wie Dioxan, Tetrahydrofuran, Diethylether, Di-n-propylether, Diisopropylether, Di-n-butylether, 1,2-Dimethoxybenzol und Anisol; chlorierte Kohlenwasserstoffe, wie Dichlormethan, Trichlormethan, Tetrachlormethan, 1,2-Dichlorethan, 1,1,1-Trichlorethan, Trichlorethylen, Tetrachlorethylen und Chlorbenzol; Kohlenwasserstoffe, wie Pentan, n-Hexan, Hexan-Isomerengemische, Cyclohexan, Heptan, Octan, Waschbenzin, Petrolether, Benzol, Ethylbenzol, Toluol, Xylole und Ketone, wie Aceton, Methylethylketon, Methylisobutylketon, oder Gemische dieser Lösungsmittel, wobei Toluol, Anisol, Chlorbenzol, 4-Methylbenzoesäuremethylester, 3-Chlorbenzoesäuremethylester und Phthalsäuredimethylester, insbesondere Toluol und Anisol, besonders bevorzugt eingesetzt werden.

Bei dem erfindungsgemäßen Verfahren wird Lösungsmittel in Mengen von vorzugsweise 20 bis 99 Gewichtsprozent, besonders bevorzugt 50 bis 95 Gewichtsprozent, jeweils bezogen auf das Gesamtgewicht der Reaktionsmasse, eingesetzt.

Die im Rahmen des erfindungsgemäßen Verfahrens angewandten Temperaturen und Drücke können die gleichen sein wie bei den bisher bekannten Verfahren zum Anlagern von Si-gebundenem Wasserstoff an aliphatische Mehrfachbindung in Gegenwart von Katalysator. Es sind dies vorzugsweise Temperaturen zwischen 0 und 180°C und Drücke zwischen 900 und 1100 hPa, wobei Temperaturen zwischen 80 und 150°C besonders bevorzugt sind. Falls erwünscht, können auch höhere oder niedrigere Drücke angewendet werden.

Bei dem erfindungsgemäßen Verfahren werden Ester- und/oder Amidgruppen aufweisendes α,ω-Dialkenylimid, zwei Sigebundene Wasserstoffatome aufweisende Organosiliciumverbindung, Katalysator und gegebenenfalls Lösungsmittel auf beliebige und an sich bekannte Weise vermischt.

Selbstverständlich kann bei dem erfindungsgemäßen Verfahren zur Herstellung von Polyimidsiloxanen, die zusätzlich Ester- und/oder Amidgruppen aufweisen, die Reaktionsmasse außer Ester- und/oder Amidgruppen aufweisendes α,ω-Dialkenylimid, Organosiliciumverbindung mit zwei Si-gebundenen Wasserstoffatomen, Katalysator und gegebenenfalls Lösungsmittel noch weitere Stoffe, beispielsweise ausgewählt aus der Gruppe der die Anlagerung von Si-gebundenem Wasserstoff an aliphatische Mehrfachbindung verzögernden Mittel, Kettenbegrenzungsmittel und Vernetzer, enthalten. Auch können zusätzlich weitere α,ω-Dialkenylverbindungen, wie zum Beispiel reine α,ω-Dialkenylimide, α,ω-Dialkenylaromaten und α,ω-Dialkenyloxyaromaten, eingesetzt werden, wobei diese weiteren gegebenenfalls eingesetzten Dialkenylverbindungen vorzugsweise keine anderen funktionellen Gruppen als Imid-, Ester- oder Amidgruppen aufweisen.

Beispiele für die Anlagerung von Si-gebundenem Wasserstoff an aliphatische Mehrfachbindung verzögernde Mittel sind Benzotriazol und 2-Methyl-3-butin-2-ol.

Beispiele für Kettenbegrenzungsmittel sind Verbindungen mit einem Si-gebundenen Wasserstoffatom, wie Trimethyl-, Triethyl- und Diethylmethylsilan, und Verbindungen mit einer aliphatischen Kohlenstoff-Kohlenstoff-Mehrfachbindung, wie Trimethylvinylsilan, Triethylvinylsilan, Styrol, Allylbenzol und N-Allylphthalimid.

Beispiele für Vernetzer sind trifunktionelle Verbindungen, wie Triallylisocyanurat, Glycerintriallylether, 1,3,5-Triallylbenzyltricarboxylat und 1,3,5-Triallylbenzol sowie polyfunktionelle Verbindungen, wie lineare oder cyclische Methylvinyl- bzw. Methylhydrogen(poly)siloxane, die neben den Methylvinyl- bzw. Methylhydrogensiloxaneinheiten auch Dimethylsiloxaneinheiten aufweisen können.

Das erfindungsgemäße Verfahren kann bei kontinuierlichem, semikontinuierlichem und diskontinuierlichem Betrieb durchgeführt werden. Vorzugsweise wird ein Reaktionsteilnehmer, beispielsweise die zwei Si-gebundene Wasserstoffatome aufweisende Organosiliciumverbindung, gegebenenfalls im Gemisch mit Lösungsmittel, einem den anderen Reaktionsteilnehmer enthaltenden Gemisch, wie beispielsweise einem Gemisch aus Ester- und/oder Amidgruppen aufweisendes α,ω-Dialkenylimid, Katalysator und gegebenenfalls Lösungsmittel sowie weiteren Komponenten, unter Rühren zugetropft.

Nach Beendigung der erfindungsgemäßen Umsetzung von Ester- und/oder Amidgruppen aufweisendem α,ω-Dialkenylimid mit zwei Si-gebundene Wasserstoffatome aufweisender Organosiliciumverbindung in Gegenwart eines die Anlagerung von Si-gebundenem Wasserstoff an aliphatische Mehrfachbindung fördernden Katalysators wird die Reaktionsmasse nach an sich bekannten Verfahren, wie beispielweise Destillation, Filtration und Umfällen, aufgearbeitet. Die erfindungsgemäßen Ester- und/oder Amidgruppen aufweisenden Polyimidsiloxane, insbesondere die Estergruppen aufweisenden Polyimidsiloxane, werden mit einer Ausbeute von im allgemeinen mehr als 80 %, bezogen auf das Gesamtgewicht an Ester- und/oder Amidgruppen aufweisendem α,ω-Dialkenylimid und zwei Si-gebundene Wasserstoffatome aufweisender Organosiliciumverbindung, erhalten.

Die nach dem erfindungsgemäßen Verfahren hergestellten Polyimidsiloxane, die zusätzlich Ester- und/oder Amidgruppen aufweisen, haben vorzugsweise ein durchschnittliches Molekulargewicht (Gewichtsmittel) M_{w} zwischen 5 000 und 500 000, besonders bevorzugt zwischen 15 000 und 200 000.

Der Siloxananteil, das heißt der Gewichtsanteil der Organosiliciumverbindung im erfindungsgemäßen bzw. erfindungsgemäß hergestellten, Ester- und/oder Amidgruppen aufweisenden Polyimidsiloxan, liegt dabei vorzugsweise zwischen 20 und 95 Gewichtsprozent, besonders bevorzugt zwischen 30 und 80 Gewichtsprozent, insbesondere zwischen 35 und 70 Gewichtsprozent.

Die erfindungsgemäßen Ester- und/oder Amidgruppen aufweisenden Polyimidsiloxane besitzen in Abhängigkeit vom Siloxangehalt und insbesondere von den Esterimid- bzw. Amidimid-Einheiten das Eigenschaftsbild von Thermoplasten oder thermoplastischen Elastomeren mit sehr guten bis ausgezeichneten mechanischen Eigenschaften, wie hohen Zug- und Reißfestigkeiten und/oder hohen Reißdehnungen. Darüber hinaus zeichnen sich die erfindungsgemäßen Ester- und/oder Amidgruppen aufweisende Polyimidsiloxane durch eine sehr hohe thermooxidative Beständigkeit aus.

Zahlreiche der erfindungsgemäßen Ester- und/oder Amidgruppen aufweisenden Polyimidsiloxane, und zwar solche mit calamitischer Esterimid- bzw. Amidimid-Struktureinheit und mit Siloxananteilen von 35 bis 80 Gewichtsprozent zeigen flüssigkristallines Verhalten, wobei sich die Mesophasen der erfindungsgemäßen Ester- und/oder Amidgruppen aufweisenden Polyimidsiloxane im allgemeinen über große Temperaturbereiche erstrecken.

Für die erfindungsgemäßen Ester- und/oder Amidgruppen aufweisenden Polyimidsiloxane bestehen zahlreiche Anwendungsmöglichkeiten. So eignen sie sich beispielsweise zur Herstellung von Formmassen, Folien und Trennmembranen nach thermoplastischen Verarbeitungsverfahren, wie Spritzgießen oder Extrudieren. Des weiteren eignen sie sich in Abhängigkeit vom Siloxangehalt und von den Esterimid- bzw. Amidimid-Einheiten zur Herstellung von Schutzüberzügen für Halbleiter und sonstige elektrische Isolatoren, wie Kabelummantelungen, sowie von Beschichtungen und Klebstoffen.

Der jeweiligen Anwendung entsprechend können dem erfindungsgemäßen Ester- und/oder Amidgruppen aufweisenden Polyimidsiloxan die üblichen Zusatzstoffe, wie Füllstoffe, Pigmente und Verarbeitungshilfsmittel zugesetzt werden.

In den nachstehend beschriebenen Beispielen beziehen sich alle Angaben von Teilen und Prozentsätzen, falls nicht anders angegeben, auf das Gewicht. Sofern nicht anders angegeben, werden die nachstehenden Beispiele bei einem Druck der umgebenden Atmosphäre, also etwa bei 1000 hPa, und bei Raumtemperatur, also bei etwa 23°C, bzw. bei einer Temperatur, die sich beim Zusammengeben der Reaktanden bei Raumtemperatur ohne zusätzliche Heizung oder Kühlung einstellt, durchgeführt.

Die Bestimmung des mittleren Molekulargewichts M̅_{w} und des mittleren Polymerisationsgrades P̅_{w} erfolgt gelpermeationschromatographisch relativ zu Polystyrol-Standards mit Hilfe eines Hochdruck-Flüssigkeitschromatographen unter Verwendung von Polystyrolgel-Säulen und Tetrahydrofuran als Laufmittel.

Thermoanalytische Messungen werden bei einer Aufheizrate von 10°/min durchgeführt. Sofern nicht anders angegeben, werden der Glaspunkt T_{g} und Klärpunkt Tᵢ dem 2. Lauf der Differentialthermoanalyse-(DTA-)Kurve entnommen und die Zersetzungstemperatur - 5 % Gewichtsverlust - der Thermogravimetrie-(TG-)Kurve.

Die Bestimmung der Schichtabstände d erfolgt durch Röntgenkleinwinkel-Beugungsexperimente.

Die 200 MHz-¹H-NMR-Spektren werden mit einem NMR-Spektrometer WP 200 SY der Firma Bruker und die 300 MHz-¹H-NMR-Spektren werden mit einem NMR-Spektrometer AC 300 P der Firma Bruker in den genannten Lösemitteln mit Tetramethylsilan (TMS, δ = 0,00) als innerem Standard gemessen, sofern nicht anders angegeben.

Reißfestigkeiten werden durch Zugversuche nach DIN 53455 ermittelt.

Im Nachstehenden werden die folgenden Abkürzungen verwendet: DSC: Differential Scanning Calorimetrie
- M̅_{w}:: Gewichtsmittel
- M̅ₙ:: numerisches Mittel
- P̅_{w}:: Polymerisationsgrad
- T_{g}:: Glaspunkt
- Tᵢ:: Klärpunkt
- d :: Schichtabstand
- T_{z}:: Zersetzungstemperatur
- Fp.:: Festpunkt

### Herstellung von α,ω-Dihydrogendimethyl(poly)siloxanen

### A

1250 ml (6,98 mol) 1,3-Dihydrogentetramethyldisiloxan (käuflich erhältlich unter der Bezeichnung "HSi2" bei der Wacker-Chemie GmbH, D-8000 München) werden in einer 5 l-Enghalsflasche vorgelegt und unter Rühren mit 1875 g α,ω-Dihydroxydimethylpolysiloxan (käuflich erhältlich bei der ABCR GmbH & Co., D-7500 Karlsruhe 21, unter der Bezeichnung "Polydimethylsiloxane, Silanol-Terminated, PS 345.5") portionsweise versetzt. In dieses Gemisch werden 25,1 ml einer PNCl₂-Lösung (15 prozentig in CHCl₃; käuflich erhältlich bei der Aldrich-Chemie GmbH & Co. KG, D-7924 Steinheim, unter der Bezeichnung "Phosphornitrilchlorid, trimer".) und anschließend weitere 938 g des oben näher bezeichneten α,ω-Dihydroxydimethylpolysiloxans gegeben. Die so erhaltene Mischung läßt man bis zur vollständigen Homogenisierung (ca. 6 Stunden) rühren, wäscht dann mit insgesamt 6 l Wasser, trocknet über Natriumsulfat und destilliert im Vakuum.

Es werden die folgenden Fraktionen erhalten, wobei der zu dem jeweiligen Siedepunkt (Kp) gehörende Druck in Torr angegeben ist.
1. Fraktion: Kp₉₄ 105 - 110°C
   205.3 g α,ω-Dihydrogenoctamethyltetrasiloxan (55%) und
   Octamethylcyclotetrasiloxan (44%)
2. Fraktion: Kp₄₈ 120.5 - 123.5°C
   110.1 g α,ω-Dihydrogendecamethylpentasiloxan (67%) und
   Decamethylcyclopentasiloxan (33%)
3. Fraktion: Kp₁₈ 100°C
   55.0 g α,ω-Dihydrogendecamethylpentasiloxan (73%) und
   Decamethylcyclopentasiloxan (27%)
4. Fraktion: Kp₇ 108.5 - 109.5°C
   130.5 g α,ω-Dihydrogendodecamethylhexasiloxan (92.4%) und
   Dodecamethylcyclohexasiloxan (7.6%)
5. Fraktion: Kp₇ 130.5 - 145°C
   116 g α,ω-Dihydrogentetradecamethylheptasiloxan (87%) und
   Tetradecamethylcycloheptasiloxan (13%)
6. Fraktion: Kp₇ 145 - 154°C
   166 g α,ω-Dihydrogenhexadecamethyloctasiloxan
7. Fraktion: Kp₇ 170°C
   121 g α,ω-Dihydrogenoctadecamethylnonasiloxan
8. Fraktion: Kp_{0.01} 136 - 139°C
   100.5 g α,ω-Dihydrogeneicosamethyldecasiloxan
9. Fraktion: Kp_{0.01} 150°C
   113.1 g α,ω-Dihydrogendocosamethylundecasiloxan
10. Fraktion: Kp_{0.05} 163°C
   96.7 g α,ω-Dihydrogentetracosamethyldodecasiloxan.

### B

92,5 g (0,31 mol) Octamethylcyclotetrasiloxan (käuflich erhältlich bei Aldrich-Chemie GmbH & Co. KG, D-7924 Steinheim) und 20,9 g (0,16 mol) 1,3-Dihydrogentetramethyldisiloxan (käuflich erhältlich unter der Bezeichnung "HSi2" bei der Wacker-Chemie GmbH, D-8000 München) werden mit 20 g Ionenaustauscher Amberlyst XN-1010 in der wasserfreien Form (käuflich erhältlich bei Aldrich-Chemie GmbH & Co. KG, D-7924 Steinheim) versetzt und langsam auf 100° C erhitzt. Nach dem Abkühlen wird der Ionenaustauscher abfiltriert.

Das Filtrat besteht aus einem Äquilibrat, aus dem durch Andestillieren bei einer Temperatur von 50°C und einem Druck von 13 hPa niedermolekulare Bestandteile entfernt werden. Der so erhaltene Rückstand (110.7 g) besteht aus einem α,ω-Dihydrogendimethylpolysiloxan-Gemisch mit einer mittleren Kettenlänge von 12 Siloxaneinheiten. Dieses α,ω-Dihydrogendimethylpolysiloxan-Gemisch kann bei dem erfindungsgemäßen Verfahren direkt eingesetzt werden.

### Beispiel 1

### a) Herstellung von N-Allyl-4-phthalimidcarbonsäure

Zu einem Gemisch aus 792,3 g (4,0 mol) 97 %igem Trimellitsäureanhydrid (käuflich erhältlich bei Janssen Chimica, D-4057 Brüggen) in 2 l Veratrol werden bei 70°C 306 ml (4.0 mol) Allylamin getropft, wobei die Temperatur auf 95°C ansteigt und die entstehende Amidsäure ausfällt. Unter fortgesetztem Rühren wird langsam weitererhitzt bis das Reaktionswasser abdestilliert ist. Man rührt noch 15 Minuten unter Rückfluß bei 206 °C, läßt dann etwas abkühlen und destilliert bei 130°C und 10 hPa 1,5 l Veratrol ab. Anschließend wird 1 l Toluol zugegeben und auf Raumtemperatur abgekühlt. Das ausgefallene Allylimid wird abgesaugt und nochmals aus Toluol umkristallisiert. Man erhält 826 g (89 %) N-Allyl-4-phthalimidcarbonsäure als farblose Kristalle.

### 300 MHz-¹H-NMR-Spektrum (CDCl₃)

- δ =: 4,31 ("d", J = 6 Hz, 2 H, N-CH₂-), 5,21 (d, J = 10 Hz, 1 H, N-CH₂-CH=CHₐH_{b}), 5,27 (d, J = 16 Hz, 1 H, N-CH₂-CH=CHₐH_{b}), 5,68 (ddd, J = 16; 10; 6 Hz, 1 H, N-CH₂-CH=), 7,98 (d, J = 8 Hz, 1 H, 6-H), 8,48 ("d", J = 8 Hz, 1 H, 5-H), 8,57 ("s", 1 H, 3-H).

### b) Herstellung von N-Allyl-4-phthalimidcarbonylchlorid

Zu einem Gemisch von 393 g (3,0 mol) N-Allyl-4-phthalimidcarbonsäure, dessen Herstellung oben unter a) beschrieben ist, in 1,5 l Toluol werden bei 50 bis 60°C 340 ml (3,75 mol) Oxalylchlorid getropft und 6 Stunden bei 60 bis 85°C gerührt. Anschließend wird das Toluol zunächst bei 40°C und 30 hPa abdestilliert und schließlich im Hochvakuum vollständig entfernt. Man erhält 831,7 g (100 %) N-Allyl-4-phthalimidcarbonylchlorid als ¹H-NMR-spektroskopisch einheitliches Rohprodukt.

### 300 MHz-¹H-NMR-Spektrum (CDCl₃)

- δ =: 4,35 ("d", J = 6 Hz, 2 H, N-CH₂-), 5,23 (d, J = 10 Hz, 1 H, N-CH₂-CH=CHₐH_{b}), 5,29 (d, J = 16 Hz, 1 H, N-CH₂-CH=CHₐH_{b}), 5,90 (ddd, J = 16; 10; 6 Hz, 1 H, N-CH₂-CH=), 8,05 (d, J = 8 Hz, 6-H), 8,51 ("d", J = 8 Hz, 1 H, 5-H), 8,57 ("s", 1 H, 3-H).

### c) Herstellung von 1,4-Bis-(N-allyl-4-phthalimidcarbonyloxy)-benzol

Zu einem Gemisch von 110 g (1,0 mol) Hydrochinon, 292 ml (2,1 mol) Triethylamin und 2 l Toluol werden langsam 1269 ml (2,1 mol) einer 1,655 molaren Lösung von N-Allyl-4-phthalimidcarbonylchlorid, dessen Herstellung oben unter b) beschrieben ist, in Toluol getropft, wobei die Innentemperatur auf 70°C ansteigt. Anschließend wird noch 2 Stunden unter Rückfluß auf 110 °C erhitzt.

Zur Aufarbeitung wird die Reaktionsmischung auf ein Gemisch aus 500 ml Eis und 200 ml 10 %ige HCl in Wasser gegossen, der entstandene Feststoff abgesaugt und mit 800 ml einer 0,1 n HCl-Lösung in Wasser/Ethanol (95/5) gewaschen. Der so erhaltene Rückstand wird zur Entfernung von Triethylaminresten nochmals in einer 0,1 n HCl Lösung in Wasser/Ethanol (95/5) aufgerührt, erneut abgesaugt, erst mit gesättigter Natriumhydrogencarbonat-Lösung und Ethanol im Mischungsverhältnis 95/5, dann mit Wasser/Ethanol (95/5) gewaschen. Das Rohprodukt wird bei 70°C und 10 hPa getrocknet und schließlich aus Toluol umkristallisiert. Man erhält 480 g (90 %) 1,4-Bis-(N-allyl-4-phthalimidcarbonyloxy)-benzol als farbige Kristalle.
Fp. 210,0°C (nach DSC)

### 300 MHz ¹NMR-Spektrum (DMSO-d₆)

- δ =: 4,27 (d, J = 6 Hz, 4 H, N-CH₂-), 5,17 (d, J = 10 Hz, 2 H, N-CH₂-CH=CHₐH_{b}), 5,20 (d, J = 16 Hz, 2 H, N-CH₂-CH=CHₐH_{b}), 5,93 (ddd, J = 16; 10; 6 Hz, 2 H, N-CH₂-CH=CH₂), 7,52 (s, 4 H, -O-C₆H₄-O-), 8,13 (d, J = 8 Hz, 2 H, 6-H), 8,47 ("s", 2 H, 3-H), 8,59 ("d", J = 8 Hz, 2 H, 5-H).

### d) Herstellung von Dicyclopentadien-Platindichlorid

Dicyclopentadien-Platindichlorid (dicpPtCl₂) gemäß US-PS 4,276,252 (G. Kreis, Wacker-Chemie GmbH; ausgegeben am 30. Juni 1981) wird nach literaturbekannten Verfahren (J.Chatt, L.M.Vallarino, L.M.Venanzi, J.Chem.Soc.(London) (1957) 2496-505 und H.C.Clark, L.E.Manzer, J.Organometal.Chem. 59 (1973) 411-28) hergestellt. 7,00 g (0,0169 mol) K₂PtCl₄ werden in 120 ml Wasser gelöst und mit 90 ml n-Propanol, 11,50 g (0,0870 mol) Dicyclopentadien sowie 60 mg wasserfeiem SnCl₂ versetzt. Der nach zweitägigem Rühren bei Raumtemperatur ausgefallene, voluminöse Niederschlag wird abfiltriert und mit Wasser, wenig Ethanol und anschließend n-Hexan gewaschen. Der Niederschlag wird in Dichlormethan gelöst und anschließend bei einer Temperatur von -80 °C unter Zugabe von n-Hexan gefällt. Nach Filtration und Trocknen verbleiben 5,70 g (0,0143 mol) dicpPtCl₂ als helles Pulver, welches laut Elementaranalyse 49,0 Gewichtsprozent Platin enthält. Die Ausbeute, bezogen auf elementares Platin, beträgt 85 %.

### e) Copolymerisation

29,8 g (55 mmol) des oben unter c) beschriebenen 1,4-Bis-(N-allyl-4-phthalimidcarbonyloxy)-benzols werden in 700 ml wasserfreiem Toluol gelöst und unter Argonatmosphäre auf 110°C erhitzt. Zu dieser Lösung werden zunächst 40 g (50 mmol) des unter A beschriebenen α,ω-Dihydrogendocosamethylundecasiloxans und dann 0,32 ml (4 »mol) einer 1,27·10⁻³ molaren Lösung von Dicyclopentadien-Platindichlorid, dessen Herstellung oben unter d) beschrieben ist, in Chloroform zugetropft. Weitere 6,0 g (7,5 mmol) α,ω-Dihydrogendocosamethylundecasiloxan und 0,11 ml (1,5 »mol) der vorgehend beschriebenen Dicyclopentadien-Platindichlorid-Lösung werden während 1 Stunde sehr langsam zugetropft. Im Anschluß daran wird noch 1 Stunde unter Rückfluß auf 110 °C erhitzt. Nach dem Abkühlen wird erst über eine 3 mm hohe Tonsil-Schicht (Tonsil ist eine hochaktive Bleicherde der Süd-Chemie AG, D-8000 München) und dann über einen Membranfilter (Porengröße 1 »m) filtriert. Das Filtrat wird im Vakuum auf ein Volumen von 200 ml eingeengt und durch Einrühren in die vierfache Menge Ethanol umgefällt. Das ausgefallene Copolymer wird abgetrennt, in 200 ml Toluol gelöst und über einen 1 »-Membranfilter filtriert. Das Filtrat wird anschließend im Vakuumtrockenschrank bei 60 bis 150°C und 10 bis 0,1 hPa vom Lösemittel befreit. Man erhält 50,5 g (69 %) des erfindungsgemäßen Copolymers als beige-farbene, transparente Folie. Das Copolymer besitzt ein Gewichtsmittel M̅_{w} von 95200, ein Verhältnis von Gewichtsmittel M̅_{w} zu numerischem Mittel M̅ₙ von 2,61 und einen mittleren Polymerisationsgrad P̅_{w} von 71 mit folgender Wiederholungseinheit: 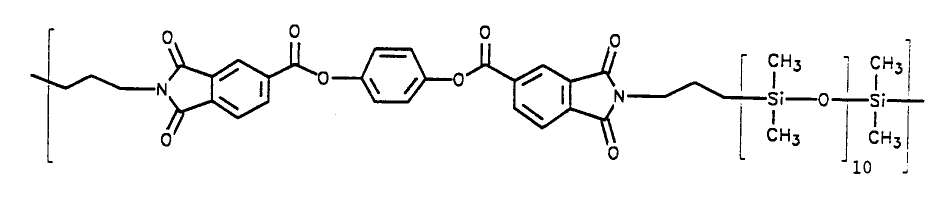
Das erhaltene Estergruppen aufweisende Polyimidsiloxan hat zwei Glaspunkte bei -86°C und 8°C und unterhalb des Klärpunktes bei 128°C eine smektische Schichtstruktur, wobei der Schichtabstand 3,7 nm beträgt. Die Zersetzungstemperatur beträgt 392°C unter Stickstoff und 355°C unter Luft.

Das erhaltene Estergruppen aufweisende Polyimidsiloxan hat bei 0°C eine Reißfestigkeit von 16,6 MPa und eine Reißdehnung von 400 % und bei 23°C eine Reißfestigkeit von 13,3 MPa und eine Reißdehnung von 536 %.

### 300 MHz-¹H-NMR-Spektrum (CDCl₃, innerer Standard CHCl₃, δ = 7,25)

- δ =: 0,05 (m, schmal, 66 H, -Si(CH₃)₂-O-), 0,58 (m, 4 H, Si-CH₂-), 1,71 (m, 4 H, Si-CH₂-CH₂-) 3,70 (t, J = 8 Hz, 4 H, N-CH₂-), 7,35 (s, 4 H, -O-C₆H₄-O-), 7,99 (d, J = 8 = Hz, 2 H, 6-H), 8,57 ("d", J = 8 Hz, 2 H, 5-H), 8,64 ("s", 2 H, 3-H).

### Beispiel 2

Die in Beispiel 1 beschriebene Verfahrensweise wird wiederholt mit der Abänderung, daß anstelle des α,ω-Dihydrogendocosamethylundecasiloxans andere, nach der oben beschriebenen Arbeitsweise A hergestellte Siloxane der Formel 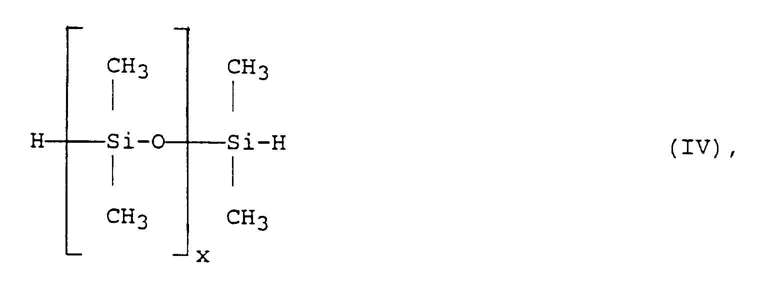
worin x jeweils die in Tabelle 1 angegebene Bedeutung hat, eingesetzt werden. Die erhaltenen Estergruppen aufweisenden Polyimidsiloxane werden durch Ausbeute, M̅_{w},
M̅_{w}/M̅ₙ, P̅_{w}, T_{g}, Tᵢ und d, Zersetzungstemperaturen in Stickstoff-Atmosphäre und Luft, sowie durch Reißfestigkeit und Reißdehnung bei 23 und 0°C in den Tabellen 1 und 1a charakterisiert.

**Tabelle 1**

| Versuch | x | Ausbeute [%] | M̅_{w} | M̅_{w}/M̅ₙ | P̅_{w} | T_{g} [°C] | Tᵢ [°C] | d [nm] |
|---|---|---|---|---|---|---|---|---|
| 2.1 | 4 | 74 | 29000 | 2,07 | 33 | 32 | 135 | 3,2 |
| 2.2 | 5 | 79 | 62000 | 2,26 | 64 | -68;27 | 143 | - |
| 2.3 | 6 | 92 | 25800 | 1,73 | 25 | 22 | 103 | 3,4 |
| 2.4 | 7 | 71 | 25400 | 1,71 | 23 | -71;19 | 109 | - |
| 2.5 | 8 | 78 | 66000 | 1,78 | 31 | -86;16 | 119 | 3,5 |
| 2.6 | 11 | 72 | 57300 | 1,77 | 41 | 15 | 129 | 3,9 |
| 2.7 | 12 | 88 | 46500 | 2,14 | 31 | -95;1 | 121 | 4,0 |
| 2.8 | 14 | 88 | 79400 | 1,64 | 48 | -102 | 108 | 4,2 |
| 2.9 | 19 | 92 | 47900 | 2,37 | 24 | -113;-12 | 86 | 4,8 |

**Tabelle 1a**

| Versuch | T_{z} [°C] | | Reißfestigkeit[MPa] (Reißdehnung[%]) | |
|---|---|---|---|---|
| | N₂ | Luft | 0°C | 23°C |
| 2.1 | - | - | 18,1 (200) | 16,3 (427) |
| 2.2 | 403 | 375 | 17,0 (141) | 13,4 (529) |
| 2.3 | 380 | 367 | - | - |
| 2.4 | - | - | - | - |
| 2.5 | 410 | 380 | 23,8 (379) | 17,4 (529) |
| 2.6 | 413 | 388 | - | - |
| 2.7 | 358 | 400 | - | - |
| 2.8 | 413 | 383 | 9,0 (417) | 16,7 (458) |
| 2.9 | 425 | 402 | 1,0 (360) | 0,5 (1100) |

### Beispiel 3

### a) Herstellung von 4,4'-Bis-(N-allyl-4-phthalimidcarboxyloxy)-biphenyl

Zu einem Gemisch von 192,3 g (0,95 mol) 92 %igem 4,4'-Dihydroxybiphenyl (käuflich erhältlich bei der Janssen Chimica, D-4057 Brüggen) und 1 g 4-Dimethylaminopyridin in 2,5 l Pyridin werden bei 50 bis 60°C unter Rühren 1081 ml einer 1,85 molaren Lösung des in Beispiel 1 unter b) beschriebenen N-Allyl-4-phthalimidcarbonylchlorids in Toluol getropft. Anschließend wird noch 5 Stunden unter Rückfluß auf 110°C erhitzt. Die Aufarbeitung wird wie in Beispiel 1 unter c) beschrieben durchgeführt. Das Rohprodukt wird bei 120°C und 10 hPa getrocknet und aus Anisol umkristallisiert. Man erhält 516 g (89 %) 4,4'-Bis-(N-allyl-4-phthalimidcarbonyloxy)-biphenyl als farblose Kristalle.
Fp. 250,3°C (nach DSC)

### 300 MHz-¹H-NMR-Spektrum (CDCl₃)

- δ =: 4,37 ("d", J = 6 Hz, 4 H, N-CH₂-), 5,25 (d, J = 10 Hz, 2 H, N-CH₂-CH=CHₐH_{b}), 5,30 (d, J = 16 Hz, 2 H, N-CH₂-CH=CHₐH_{b}), 5,93 (ddd, J = 16; 10; 6 Hz, 2 H, N-CH₂-CH=CH₂), 7,36 und 7,69 (2 m, AA'BB'-Spektrum, 8 H, 4,4'-Biphenyl), 8,03 (d, J = 8 Hz, 2 H, 6-H), 8,62 ("d", J = 8 Hz, 2 H, 5-H), 8,70 ("s", 2 H, 3-H).

### b) Copolymerisation

34,0 g (55 mmol) des oben unter a) beschriebenen 4,4'-Bis-(N-allyl-phthalimidcaroxyloxy)-biphenyls werden mit 600 ml Anisol vermischt und unter Argonatmosphäre auf 130°C erhitzt. Zu diesem Gemisch werden zunächst 36,6 g (50 mmol) des unter A beschriebenen α,ω-Dihydrogeneicosamethyldecasiloxans und dann 4,3 ml (5,5 »mol) einer 1,27 · 10⁻³ molaren Lösung von Dicyclopentadien-Platindichlorid, dessen Herstellung in Beispiel 1 unter d) beschrieben ist, in Chloroform zugetropft. Weitere 5,4 g (7,5 mmol) α,ω-Dihydrogeneicosamethyldecasiloxan und 0,8 ml (1 »mol) der vorgehend beschriebenen Dicyclopentadien-Platindichlorid-Lösung werden während 1 Stunde langsam zugetropft Im Anschluß daran wird noch 1 Stunde unter Rückfluß bei 130°C gerührt. Nach dem Abkühlen wird erst über eine 3 mm hohe Tonsil-Schicht filtriert, das Lösemittel im Vakuum abgezogen, der Rückstand in 500 ml Toluol gelöst und über einen Membranfilter (Porengröße 1 »m) filtriert. Das Filtrat wird im Vakuum auf ein Volumen von 200 ml eingeengt und durch Einrühren in 800 ml Ethanol umgefällt. Der Niederschlag wird abfiltriert, mit Ethanol gewaschen und im Vakuumtrockenschrank zunächst bei 60°C und 10 hPa, dann bei 150°C und 0,1 hPa vom Lösemittel befreit. Man erhält 65,7 g (89 %) des erfindungsgemäßen Copolymers als hellgelben, feinkörnigen Feststoff. Das Copolymer besitzt ein Gewichtsmittel M̅_{w} von 68800, ein Verhältnis von Gewichtsmittel M̅_{w} zu numerischem Mittel M̅ₙ von 2,24 und einen mittleren Polymerisationsgrad P̅_{w} von 51 mit folgender Wiederholungseinheit: 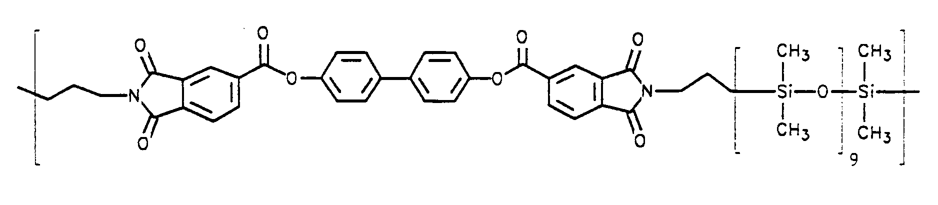
Das so erhaltene Estergruppen aufweisende Polyimidsiloxan hat zwei Glaspunkte bei -81°C und 27°C und unterhalb des Klärpunktes bei 213°C eine smektisch-C-Schichtstruktur, wobei der Schichtabstand 4,05 nm beträgt. Die Zersetzungstemperatur beträgt 430°C unter Stickstoff-Atmosphäre und 408°C unter Luft.

Das erhaltene Estergruppen aufweisende Polyimidsiloxan hat bei 0°C eine Reißfestigkeit von 24,1 MPa und eine Reißdehnung von 379 % und bei 23°C eine Reißfestigkeit von 20,4 MPa und eine Reißdehnung von 500 %.

### 300 MHz-¹H-NMR-Spektrum (CDCl₃, innerer Standard CHCl₃, δ = 7,25)

- δ =: 0,05 (m, schmal, 60 H, -Si(CH₃)₂-O-), 0,58 (m, 4 H, Si-CH₂-), 1,72 (m, 4 H, Si-CH₂-CH₂-), 3,71 (t, J = 8 Hz, 4 H, N-CH₂-), 7,35 und 7,66 (2 m, AA'BB'-Spektrum, 8 H, 4,4'-Biphenylen), 7,99 (d, J = 8 Hz, 2 H, 6-H), 8,57 ("d", J = 8 Hz, 2 H, 5-H), 8,66 ("s", 2 H, 3-H).

### Beispiel 4

Die in Beispiel 3 beschriebene Verfahrensweise wird wiederholt mit der Abänderung, daß anstelle des α,ω-Dihydrogeneicosamethyldecasiloxans ein Siloxan gemäß der in Beispiel 2 angegebenen Formel (IV), welches nach der unter A beschriebenen Arbeitsweise hergestellt worden ist, eingesetzt wird, worin x jeweils die in Tabelle 2 angegebene Bedeutung hat. Es werden Estergruppen aufweisende Polyimidsiloxane mit den in Tabelle 2 bzw. 2a angegebenen Ausbeuten, M̅_{w}, M̅_{w}/M̅ₙ, P̅_{w}, T_{g}, Tᵢ, d, Zersetzungstemperaturen unter Stickstoff-Atmosphäre und Luft, sowie Reißfestigkeiten und Reißdehnungen bei 0 und 23°C erhalten.

**Tabelle 2**

| Versuch | x | Ausbeute [%] | M̅_{w} | M̅_{w}/M̅ₙ | P̅_{w} | T_{g} [°C] | Tᵢ [°C] | d [nm] |
|---|---|---|---|---|---|---|---|---|
| 4.1 | 3 | 30 | 15700 | 1,74 | 18 | -52;50 | 181 | - |
| 4.2 | 4 | 83 | 51500 | 2,16 | 53 | -51;41 | 205 | - |
| 4.3 | 5 | 85 | 34000 | 2,44 | 33 | 36 | 193 | - |
| 4.4 | 6 | 87 | 17700 | 1,89 | 16 | -77;97 | 188 | 3,6 |
| 4.5 | 7 | 51 | 40400 | 2,41 | 34 | 26 | 209 | 3,8 |
| 4.6 | 8 | 87 | 63300 | 2,31 | 50 | -83;28 | 208 | 4,1 |
| 4.7 | 10 | 63 | 23200 | 2,32 | 38 | -92 | 211 | 4,2 |
| 4.8 | 11 | 93 | 75300 | 1,61 | 51 | -91;25 | 211 | - |
| 4.9 | 12 | 86 | 55200 | 2,88 | 35 | -103;16 | 196 | 4,7 |
| 4.10 | 13 | 41 | 75900 | 2,49 | 48 | -103;13 | 182 | 4,7 |
| 4.11 | 14 | 74 | 78900 | 2,84 | 46 | -103;-56; 13 | 188 | 4,8 |
| 4.12 | 15 | 83 | 101500 | 2,83 | 57 | -108;-54 | 176 | 5,0 |
| 4.13 | 19 | 95 | 59600 | 2,00 | 29 | -109;-72 | 139 | 5,1 |

**Tabelle 2a**

| Versuch | T_{z} [°C] | | Reißfestigkeit[MPa] (Reißdehnung[%]) | |
|---|---|---|---|---|
| | N₂ | Luft | 0°C | 23°C |
| 4.1 | 388 | 370 | - | - |
| 4.2 | 422 | 373 | - | - |
| 4.3 | 415 | 375 | 23,7 (61) | 11,1 (86) |
| 4.4 | 420 | 375 | 18,5 (108) | 13,3 (391) |
| 4.5 | 420 | 380 | 14,3 (100) | 10,4 (430) |
| 4.6 | 407 | 388 | 12,3 (263) | 8,1 (411) |
| 4.7 | 410 | 385 | - | 11,0 (385) |
| 4.8 | 385 | 372 | 9,8 (355) | 6,2 (434) |
| 4.9 | 417 | 380 | 10,4 (415) | 6,0 (631) |
| 4.10 | 400 | 375 | 13,4 (538 | 8,7 (589) |
| 4.11 | 422 | 385 | - | - |
| 4.12 | 410 | 394 | - | - |
| 4.13 | 415 | 395 | - | - |

### Beispiel 5

### a) Herstellung von 2,2-Bis-(4-(N-allyl-4-phthalimidcarbonyloxy)-phenyl)-propan

Zu einem Gemisch aus 228 g (1,0 mol) Bisphenol A und 292 ml (2,1 mol) Triethylamin in 2 l Toluol werden 524 g (2,1 mol) N-Allyl-4-phthalimidcarbonylchlorid, dessen Herstellung in Beispiel 1 unter b) beschrieben ist, zugegeben. Des weiteren wird wie in Beispiel 1 unter c) beschrieben verfahren. Man erhält 583 g (89 %) 2,2-Bis-(4-(N-allyl-4-phthalimidcarbonyloxy)-phenyl)-propan als farblose Kristalle.
Fp. 175°C (Toluol/Ethanol, DSC)

### 300 MHz-¹H-NMR-Spektrum (DMSO-d₆)

- δ =: 1,73 (s, 6 H, -CH₃), 4,24 (d, J = 6 Hz, 4 H, N-CH₂-), 5,18 (d, J = 10 Hz, 2 H, N-CH₂-CH=CHₐH_{b}), 5,20, (d, J = 16 Hz, 2 H, N-CH₂-CH=CHₐH_{b}), 5,91 (ddd, J = 16; 10; 6 Hz, 2 H, N-CH₂-CH=CH₂), 7,33 (AA'BB'-Spektrum, 8 H, C₆H₄), 8,10 (d, J = 8 Hz, 2 H, 6-H), 8,40 ("s", 2 H, 3-H), 8,54 ("d", J = 8 Hz, 2 H, 5-H).

### b) Copolymerisation

30 g (45,8 mmol) des oben unter a) beschriebenen 2,2-Bis-(4-(N-allyl-4-phthalimidcarbonyloxy)-phenyl)-propans werden mit 685 ml wasserfreiem Toluol vermischt und unter Argonatmosphäre auf 100°C erhitzt. Zu diesem Gemisch werden zunächst 22,8 g (45,8 mmol) des oben unter A beschriebenen α,ω-Dihydrogendodecamethylhexasiloxans und 3,6 ml (4,6 »mol) einer 1,27 · 10⁻³ molaren Lösung von Dicyclopentadien-Platindichlorid, dessen Herstellung in Beispiel 1 unter d) beschrieben ist, in Chloroform, zugetropft. Des weiteren wird wie in Beispiel 1 unter e) beschrieben verfahren. Man erhält 43,6 g (88 %) des erfindungsgemäßen Copolymers als schwach beige-farbene, transparente Folie. Das Copolymer besitzt ein Gewichtsmittel M̅_{w} von 97500, ein Verhältnis von Gewichtsmittel M̅_{w} zu numerischem Mittel M̅ₙ von 3,01 und einen mittleren Polymerisationsgrad P̅_{w} von 90 mit folgender Wiederholungseinheit: 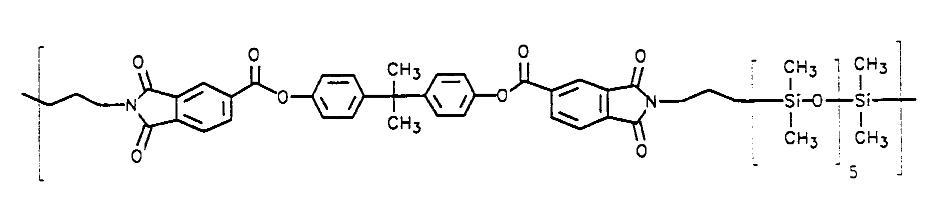
Das so erhaltene Estergruppen aufweisende Polyimidsiloxan hat einen Glaspunkt bei 40°C. Die Zersetzungstemperatur beträgt 413°C unter Stickstoff-Atmosphäre und 390°C unter Luft.

Das erhaltene Estergruppen aufweisende Polyimidsiloxan hat bei 0°C eine Reißfestigkeit von 35,8 MPa und eine Reißdehnung von 268 % und bei 23°C eine Reißfestigkeit von 30,1 MPa und eine Reißdehnung von 392 %.

### 200 MHz-¹H-NMR-Spektrum (CDCl₃, innerer Standard CHCl₃, δ = 7,25)

- δ =: 0,05 (m, 36 H, -Si(CH₃)₂-O-), 0,56 (m, 4 H, Si-CH₂-), 1,70 (m, 4 H, Si-CH₂-CH₂-), 1,72 (s, 6 H, -CH₃), 3,70 (t, J = 7 Hz, 4 H, N-CH₂-), 7,15 und 7,32 (AA'BB'-Spektrum, 8 H, C₆H₄), 7,96 (d, J = 8 Hz, 2 H, 6-H), 8,54 ("d", J = 8 Hz, 2 H, 5-H), 8,62 (s, 2 H, 3-H).

### Beispiel 6

Die in Beispiel 5 beschriebene Verfahrensweise wird wiederholt mit der Abänderung, daß anstelle des α,ω-Dihydrogendodecamethylhexasiloxans ein Siloxan gemäß der in Beispiel 2 angegebenen Formel (IV), welches nach der unter A beschriebenen Arbeitsweise hergestellt worden ist, worin x jeweils die in Tabelle 3 angegebene Bedeutung hat, oder ein nach der oben beschriebenen Arbeitsweise B hergestelltes Siloxan-Äquilibrat eingesetzt wird. Es werden Estergruppen aufweisende Polyimidsiloxane mit den in Tabelle 3 bzw. 3a angegebenen Ausbeuten, M̅_{w}, M̅_{w}/M̅ₙ, P̅_{w}, T_{g}, T_{z} sowie Reißfestigkeiten und Reißdehnungen bei 0 und 23°C erhalten.

**Tabelle 3**

| Versuch | x | Ausbeute [%] | M̅_{w} | M̅_{w}/M̅ₙ | P̅_{w} | T_{g}²⁾ [°C] |
|---|---|---|---|---|---|---|
| 6.1 | 3 | 88 | 13500 | 1,98 | 14 | -62;60 |
| 6.2 | 6 | 87 | 18400 | 2,07 | 16 | -61;25 |
| 6.3 | 8 | 86 | 67100 | 2,66 | 51 | -58;28 |
| 6.4 | 10 | 74 | 110500 | 2,34 | 76 | -83;26 |
| 6.5 | 10⁻¹ | 81 | 50400 | 2,68 | 36 | -95;22;169 |
| 6.6 | 14 | 78 | 116100 | 2,57 | 66 | -103;-65;19 |
| 6.7 | 15 | 86 | 142800 | 2,66 | 78 | -94;13;68 |
| 6.8 | 19 | 87 | 59800 | 2,07 | 28 | -105;-55;2 |

| | | | | | | |
|---|---|---|---|---|---|---|
| 1) Mittelwert eines H-Siloxan-Äquilibrats, hergestellt nach Arbeitsweise B. | | | | | | |
| 2) Klärpunkte Tᵢ können diffentialthermoanalytisch unter der angegebenen Aufheizrate nicht festgestellt werden. Gemäß Röntgenkleinwinkelbeugung zeigt Copolymer von Versuch 6.4 einen Schichtabstand von d = 4,0 nm. | | | | | | |

**Tabelle 3a**

| Versuch | T_{z} [°C] | | Reißfestigkeit[MPa] (Reißdehnung[%]) | |
|---|---|---|---|---|
| | N₂ | Luft | 0°C | 23°C |
| 6.1 | 423 | 375 | 35,1 (108)³⁾ | 31,5 (240) |
| 6.2 | - | - | - | - |
| 6.3 | 410 | 375 | 29,5 (407) | 25,0 (522) |
| 6.4 | 420 | 390 | 25,2 (429) | 22,3 (521) |
| 6.5 | 392 | 384 | - | - |
| 6.6 | 380 | 370 | ca. 20 (700) | 12,8 (885) |
| 6.7 | 404 | 372 | 20,1 (487) | 18,3 (639) |
| 6.8 | 408 | 382 | - | - |

| | | | | |
|---|---|---|---|---|
| 3) Zugfestigkeit, entspricht hier der Kraft bei Streckspannung, σ_{B} = σ_{S} = 41,6 MPa. | | | | |

### Beispiel 7

### a) Herstellung von 2,2-Bis-(4-(N-allyl-4-phthalimidcarbonyloxy)-phenyl)-1,1,1,3,3,3-hexafluorpropan

Zu einem Gemisch aus 33,6 g (0,1 mol) 2,2'-Bis-(4-hydrogxyphenyl)-perfluorpropan und 31,0 ml (0,22 mol) Triethylamin in 2 l Toluol werden 55,0 g (0,22 mol) N-Allyl-4-phthalimidcarbonylchlorid, dessen Herstellung in Beispiel 1 unter b) beschrieben ist, zugegeben. Des weiteren wird wie in Beispiel 1 unter c) beschrieben verfahren. Das Rohprodukt wird bei 70°C und 10 hPa getrocknet und aus einem Ethanol/Toluol-Gemisch umkristallisiert. Man erhält 67,0 g (88 %) 2,2-Bis-(4-(N-allyl-4-phthalimidcarbonyloxy)-phenyl)-1,1,1,3,3,3-hexafluorpropan als farblose Kristalle.
Fp. 169°C (DSC)

### 300 MHz-¹NMR-Spektrum (DMSO-d₆)

- δ =: 4,24 (d, J = 6 Hz, 4 H, N-CH₂-), 5,16 (d, J = 10 Hz, 2 H, N-CH₂-CH=CHₐH_{b}), 5,19 (d, J = 16 Hz, 2 H, N-CH₂-CH=CHₐH_{b}), 5,91 (ddd, J = 16; 10; 6 Hz, 2 H, N-CH₂-CH=CH₂), 7,54 (m, AA'BB'-Spektrum, 8 H, C₆H₄), 8,10 (d, J = 8 Hz, 2 H, 6-H), 8,43 ("s", 2 H, 3-H), 8,55 ("d", 2 H, 5-H).

### b) Copolymerisation

26,0 g (34,1 mmol) des oben unter a) beschriebenen 2,2-Bis-(4-(N-allyl-4-phthalimidcarbonyloxy)-phenyl)-1,1,1,3,3,3-hexafluorpropans werden mit 500 ml wasserfreiem Toluol vermischt und unter Argonatmosphäre auf 100°C erhitzt. Zu diesem Gemisch werden 27,1 g (34,1 mmol) des oben unter A beschriebenen α,ω-Dihydrogenhexadecamethyloctasiloxans und 2,7 ml (3,4 »mol) einer 1,27 · 10⁻³ molaren Lösung von Dicyclopentadien-Platindichlorid, dessen Herstellung in Beispiel 1 unter d) beschrieben ist, in Chloroform, zugetropft. Des weiteren wird wie in Beispiel 1 unter e) beschrieben verfahren. Man erhält 53,1 g (70 %) des erfindungsgemäßen Copolymers als schwach beige-farbene, transparente Folie.

Das Copolymer besitzt ein Gewichtsmittel M̅_{w} von 99000, ein Verhältnis von Gewichtsmittel M̅_{w} zu numerischem Mittel M̅ₙ von 3,07 und einen mittleren Polymerisationsgrad P̅_{w} von 64 mit folgender Wiederholungseinheit: 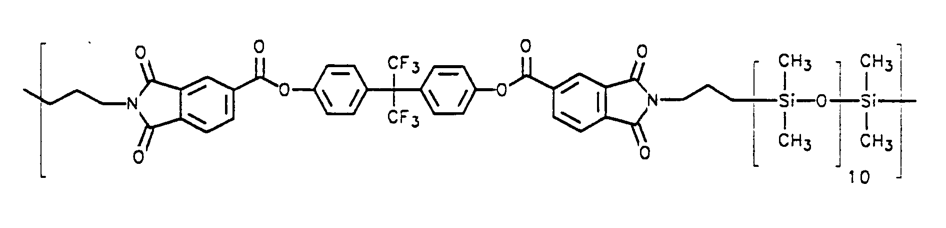
Das so erhaltene Estergruppen aufweisende Polyimidsiloxan hat zwei Glaspunkte bei -60 und 24°C. Die Zersetzungstemperatur beträgt 382°C unter Stickstoff-Atmosphäre und 363°C unter Luft.

Das erhaltene Estergruppen aufweisende Polyimidsiloxan hat bei 0°C eine Reißfestigkeit von 25,5 MPa und eine Reißdehnung von 460 % und bei 23°C eine Reißfestigkeit von 21,3 MPa und eine Reißdehnung von 622 %.

### 300 MHz-¹H-NMR-Spektrum (CDCl₃, innerer Standard CHCl₃, δ = 7,25)

- δ =: 0,05 (m, 66 H, -Si(CH₃)₂-O-), 0,57 (m, 4 H, Si-CH₂-), 1,72 (m, 4 H, Si-CH₂-CH₂-), 3,72 (t, J = 6 Hz, 4 H, N-CH₂-), 7,31 und 7,53 (2 m, AA'BB'-Spektrum, 8 H, C₆H₄), 7,99 (d, J = 8 Hz, 2 H, 6-H), 8,55 ("d", J = 8 Hz, 2 H, 5-H), 8,63 ("s", 2 H, 3-H).

### Beispiel 8

### a) Herstellung von 1,4-Bis-(N-allyl-4-phthalimidcarbonyloxy)-2-methylbenzol

Zu einem Gemisch aus 62,0 g (0,50 mol) Methylhydrochinon und 170 ml (1,20 mol) Triethylamin in 2 l wasserfreiem Toluol werden 275 g (1,10 mol) N-Allyl-4-phthalimidcarbonylchlorid, dessen Herstellung in Beispiel 1 unter b) beschrieben ist, gegeben. Des weiteren wird wie in Beispiel 1 unter c) beschrieben verfahren. Man erhält 255,0 g (93 %) 1,4-Bis-(N-allyl-4-phthalimidcarbonyloxy)-2-methylbenzol.
Fp. 222°C (DSC)

### 300 MHz-¹H-NMR-Spektrum (DMSO-d₆)

- δ =: 2,24 (s, 3 H, -CH₃), 4,25 (d, J = 6 Hz, 4 H, N-CH₂-), 5,17 (d, J = 10 Hz, 2 H, N-CH₂-CH=CHₐH_{b}), 5,20, (d, J = 16 Hz, 2 H, N-CH₂-CH=CHₐH_{b}), 5,92 (ddd, J = 16; 10; 6 Hz, 2 H, N-CH₂-CH=CH₂), 7,33 ("d", J = 8 Hz, 1 H, "Methylhydrochinon"-5-H), 7,42 ("s", 1 H, "Methylhydrochinon"-3-H), 7,45 ("d", J = 8 Hz, 1 H, "Methylhydrochinon"-6-H), 8,12 (d, verbreitert, J = 8 Hz, 2 H, "Phthalimid"-6-H), 8,45 und 8,48 (2 "s", 2 H, "Phthalimid"-3-H), 8,57 und 8,62 (2 "d", J = 8 Hz, 2 H, "Phthalimid"-5-H).

### b) Copolymerisation

21,2 g (38,6 mmol) des oben unter a) beschriebenen 1,4-Bis-(N-allyl-4-phthalimidcarbonyloxy)-2-methylbenzols werden mit 600 ml wasserfreiem Toluol vermischt und unter Argonatmosphäre auf 100°C erhitzt. Zu diesem Gemisch werden 33,0 g (40,5 mmol) des oben unter A beschriebenen α,ω-Dihydrogendocosamethylundecasiloxans und 3,0 ml (3,8 »mol) einer 1,27 · 10⁻³ molaren Lösung von Dicyclopentadien-Platindichlorid, dessen Herstellung in Beispiel 1 unter d) beschrieben ist, in Chloroform, zugetropft. Des weiteren wird wie in Beispiel 1 unter e) beschrieben verfahren. Man erhält 42,2 g (81 %) des erfindungsgemäßen Copolymers als schwach beigefarbene, transparente Folie.

Das Copolymer besitzt ein Gewichtsmittel M̅_{w} von 31100, ein Verhältnis von Gewichtsmittel M̅_{w} zu numerischem Mittel M̅ₙ von 1,83 und einen mittleren Polymerisationsgrad P̅_{w} von 23 mit folgender Wiederholungseinheit: 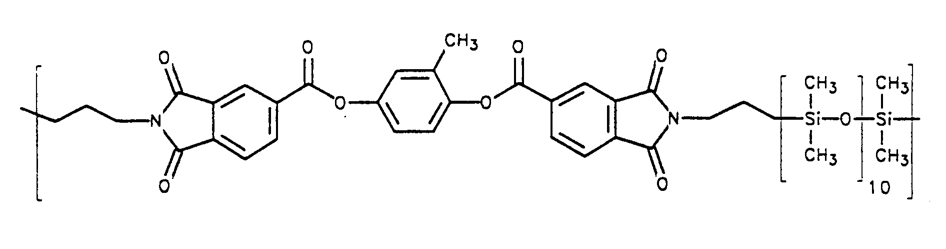
Das so erhaltene Estergruppen aufweisende Polyimidsiloxan hat zwei, durch DSC nachweisbare Glaspunkte bei -88 und 7°C. Die Zersetzungstemperatur beträgt 418°C unter Stickstoff-Atmosphäre und 383°C unter Luft.

Das erhaltene Estergruppen aufweisende Polyimidsiloxan hat bei 0°C eine Reißfestigkeit von 14,5 MPa und eine Reißdehnung von 547 % und bei 23°C eine Reißfestigkeit von 8,7 MPa und eine Reißdehnung von 1032 %.

### 300 MHz-¹H-NMR-Spektrum (CDCl₃, innerer Standard CHCl₃, δ = 7,25)

- δ =: 0,05 (m, 66 H, -Si(CH₃)₂-O-), 0,56 (m, 4 H, Si-CH₂-), 1,70 (m, 4 H, Si-CH₂-CH₂-), 2,26 (s, 3 H, -CH₃), 3,70 (t, J = 6 Hz, 4 H, N-CH₂-), 7,13 - 7,23 (m, 3 H, C₆H₃), 7,98 und 7,99 (2 d, J = 8 Hz, 2 H, 6-H), 8,54 und 8,57 (2 d, J = 8 Hz, 2 H, 5-H), 8,62 und 8,63 (2 s, 2 H, 3-H).

### Beispiel 9

### a) Herstellung von 1,3-Bis-(N-allyl-4-phthalimidcarboxyloxy)-benzol

Zu einem Gemisch aus 27,5 g (0,25 mol) Resorcin und 85 ml (0,60 mol) Triethylamin in 500 ml Toluol werden 137,5 g (0,55 mol) N-Allyl-4-phthalimidcarbonylchlorid, dessen Herstellung in Beispiel 1 unter b) beschrieben ist, gegeben. Des weiteren wird wie in Beispiel 1 unter c) beschrieben verfahren. Das Rohprodukt wird bei 70°C und 10 hPa getrocknt und aus Toluol/Ethanol umkristallisiert. Man erhält 115 g (86 %) 1,3-Bis-(N-allyl-phthalimidcarbonyloxy)-benzol als farblose Kristalle.
Fp. 153°C (Toluol/Ethanol)

### 300 MHz-¹H-NMR-Spektrum (DMSO-d₆)

- δ =: 4,24 (d, J = 6 Hz, 4 H, N-CH₂-), 5,16 (d, J = 10 Hz, 2 H, N-CH₂-CH=CHₐH_{b}), 5,18, (d, J = 16 Hz, 2 H, N-CH₂-CH=CHₐH_{b}), 5,91 (ddd, J = 16; 10; 6 Hz, 2 H, N-CH₂-CH=CH₂), 7,39 (dd, J = 8; 2 Hz, 2 H, Resorcin-4-H und 6-H), 7,49 (t, J = 2 Hz, 1 H, Resorcin-2-H), 7,63 (t, J J = 8 Hz, 1 H, Resorcin-5-H), 8,08 (d, J = 8 Hz, 2 H, Phthalimid-6-H), 8,40 , ("s", 2 H, Phthalimid-3-H), 8,53 ("d", J = 8 Hz, 2 H, Phthalimid-3-H).

### b) Copolymerisation

21,3 g (39,6 mmol) des oben unter a) beschriebenen 1,3-Bis-(N-allyl-4-phthalimidcarbonyloxy)-benzols werden mit 600 ml wasserfreiem Toluol vermischt und unter Argonatmosphäre auf 100°C erhitzt. Zu diesem Gemisch werden 33,4 g (41,6 mmol) des oben unter A beschriebenen α,ω-Dihydrogendocosamethylundecasiloxans und 3,1 ml (3,9 »mol) einer 1,27 · 10⁻³ molaren Lösung von Dicyclopentadien-Platindichlorid, dessen Herstellung in Beispiel 1 unter d) beschrieben ist, in Chloroform, zugetropft. Des weiteren wird wie in Beispiel 1 unter e) beschrieben verfahren. Man erhält 44,5 g (84 %) des erfindungsgemäßen Copolymers als schwach beige-farbene, transparente Folie.

Das Copolymer besitzt ein Gewichtsmittel M̅_{w} von 46500, ein Verhältnis von Gewichtsmittel M̅_{w} zu numerischem Mittel M̅ₙ von 2,55 und einen mittleren Polymerisationsgrad P̅_{w} von 35 mit folgender Wiederholungseinheit: 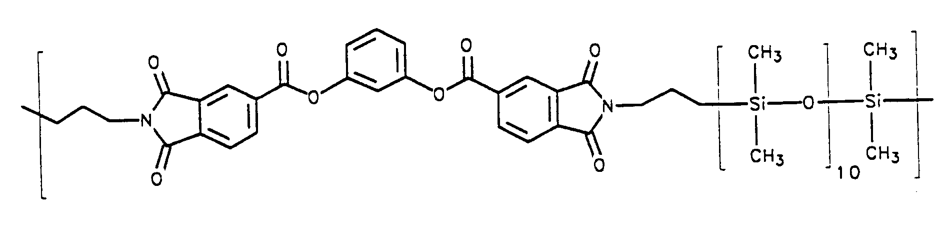
Das so erhaltene Estergruppen aufweisende Polyimidsiloxan hat zwei Glaspunkte bei -87 und 8°C. Die Zersetzungstemperatur beträgt 404°C unter Stickstoff-Atmosphäre und 370°C unter Luft.

Das erhaltene Estergruppen aufweisende Polyimidsiloxan hat bei 0°C eine Reißfestigkeit von 15,5 MPa und eine Reißdehnung von 556 % und bei 23°C eine Reißfestigkeit von 8,7 MPa und eine Reißdehnung von 798 %.

### 300 MHz-¹H-NMR-Spektrum (CDCl₃, innerer Standard CHCl₃, δ = 7,25)

- δ =: 0,05 (m, 66 H, -Si(CH₃)₂-O-), 0,57 (m, 4 H, Si-CH₂-), 1,72 (m, 4 H, Si-CH₂-CH₂-), 3,72 (t, J = 6 Hz, N-CH₂-), 7,22 (dd, J = 8; 2 Hz, 2 H, Resorcin-4-H und 6-H), 7,29 (t, J = 2 Hz, 1 H, Resorcin-2-H), 7,54 (t, J = 8 Hz, 1 H, Resorcin-5-H), 7,98 (d, J = 8 Hz, 2 H, Phthalimid-6-H), 8,56 ("d", J = 8 Hz, 2 H, Phthalimid-5-H), 8,63 ("s", 2 H, Phthalimid-3-H).

### Beispiel 10

### a) Herstellung von 2,5-Bis-(N-allyl-4-phthalimidcarbonyloxy)-biphenyl

Zu einem Gemisch aus 18,6 g (0,1 mol) 2,5-Dihydroxybiphenyl und 31 ml (0,30 mol) Triethylamin in 500 ml wasserfreiem Toluol werden 55 g (0,22 mol) N-Allyl-4-phthalimidcarbonylchlorid, dessen Herstellung in Beispiel 1 unter b) beschrieben ist, gegeben. Des weiteren wird wie in Beispiel 1 unter c) beschrieben verfahren. Das Rohprodukt wird bei 70°C und 10 hPa getrocknet und aus einem Toluol/Ethanol-Gemisch umkristallisiert. Man erhält 56,0 g (92 %) 2,5-Bis-(N-allyl-4-phthalimidcarbonyloxy)-biphenyl als farblose Kristalle.
Fp. 145°C (Toluol/Ethanol, DSC)

### 300 MHz-¹H-NMR-Spektrum (DMSO-d₆)

- δ =: 4,24 und 4,26 (2 d, J = 6 Hz, 4 H, N-CH₂-), 5,13 - 5,22 (m, 4 H, N-CH₂-CH=CH₂), 5,90 (m, 2 H, N-CH₂-CH=CH₂), 7,38, 7,55 und 7,61 (3 m, 3 H, 3 H und 2 H, 2,5-Biphenyl), 8,05 und 8,13 (2 d, J = 8 Hz, 2 H, Phthalimid-6-H), 8,30 und 8,49 (2 "s", 2 H, Phthalimid-3-H), 8,44 und 8,58
(2 "d", 2 H, Phthalimid-5-H).

### b) Copolymerisation

25,0 g (40,8 mmol) des oben unter a) beschriebenen 2,5-Bis-(N-allyl-4-phthalimidcarbonyloxy)-biphenyls werden mit 600 ml wasserfreiem Toluol vermischt und unter Argonatmosphäre auf 100°C erhitzt. Zu diesem Gemisch werden 29,6 g (40,8 mmol) des oben unter A beschriebenen α,ω-Dihydrogeneicosamethyldecasiloxans und 3,2 ml (4,1 »mol) einer 1,27 · 10⁻³ molaren Lösung von Dicyclopentadien-Platindichlorid, dessen Herstellung in Beispiel 1 unter d) beschrieben ist, in Chloroform, zugetropft. Des weiteren wird wie in Beispiel 1 unter e) beschrieben verfahren. Man erhält 45,0 g (83 %) des erfindungsgemäßen Copolymers als schwach beige-farbene, transparente Folie.

Das so erhaltene Estergruppen aufweisende Polyimidsiloxan besitzt ein Gewichtsmittel M̅_{w} von 32000, ein Verhältnis von Gewichtsmittel M̅_{w} zu numerischem Mittel M̅ₙ von 2,17 und einen mittleren Polymerisationsgrad P̅_{w} von 24 mit folgender Wiederholungseinheit: 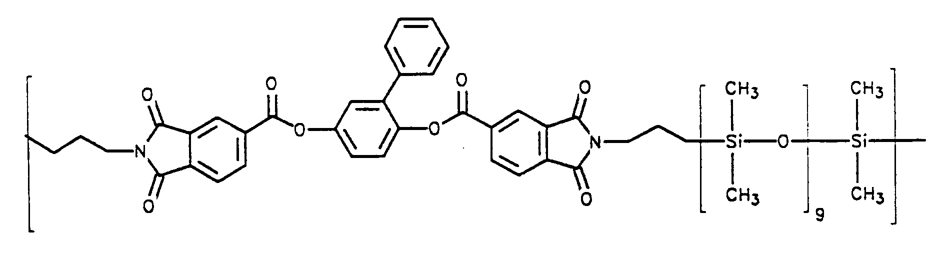
Das so erhaltene Estergruppen aufweisende Polyimidsiloxan hat zwei Glaspunkte bei -98 und 25°C. Die Zersetzungstemperatur beträgt 405°C unter Stickstoff-Atmosphäre und 378°C unter Luft.

Das erhaltene Estergruppen aufweisende Polyimidsiloxan hat bei 0°C eine Reißfestigkeit von 11,2 MPa und eine Reißdehnung von 408 % und bei 23°C eine Reißfestigkeit von 6,9 MPa und eine Reißdehnung von 645 %.

### 300 MHz-¹H-NMR-Spektrum (CDCl₃, innerer Standard CHCl₃, δ = 7,25)

- δ =: 0,05 (m, 60 H, -Si(CH₃)₂-O-), 0,56 (m, 4 H, Si-CH₂-), 1,70 (m, 4 H, Si-CH₂-CH₂-), 3,68 und 3,70 (2 t, J = 7 Hz, 4 H, N-CH₂-), 7,28 - 7,41 und 7,46 (2 m, 6 H und 2 H, 2,5-Biphenyl), 7,88 und 7,98 (2 d, J = 8 Hz, 2 H, Phthalimid-6-H) 8,32 und 8,55 (2 "d", J = 8 Hz, 2 H, Phthalimid-5-H), 8,43 und 8,64 (2 "s", 2 H, Phthalimid-3-H).

### Beispiel 11

### a) Herstellung von 1,5-Bis-(N-allyl-4-phthalimidcarbonyloxy)-naphthalin

Zu einem Gemisch aus 16,0 g (0,10 mol) 1,5-Dihydroxynaphthalin und 31 ml (0,30 mol) Triethylamin in 500 ml wasserfreiem Toluol werden 35,2 g (0,22 mol) N-Allyl-4-phthalimidcarbonylchlorid, dessen Herstellung in Beispiel 1 unter b) beschrieben ist, gegeben. Man erhält 58,0 g (99 %) 1,5-Bis-(N-allyl-4-phthalimidcarbonyloxy)-naphthalin als farblose Kristalle.
Fp. 279,6°C (Anisol, DSC)

### 300 MHz-¹H-NMR-Spektrum (DMSO-d₆)

- δ =: 4,24 (d, J = 5 Hz, 4 H, N-CH₂-), 5,16 (d, J = 10 Hz, 2 H, N-CH₂-CH=CHₐH_{b}), 5,17 (d, J = 16 Hz, 2 H, N-CH₂-CH=CHₐH_{b}), 5,91 (ddd, J = 16; 10; 5 Hz, 2 H, N-CH₂-CH=CH₂), 7,66 und 7,67 (2 d, J = 4 und 7 Hz, 4 H, Naphthalin-2,6-H und -4, 8-H), 7,96 (dd, J = 7; 4 Hz, 2 H, Naphthalin-3,7-H), 8,15 (d, J = 8 Hz, 2 H, Phthalimid-6-H), 8,56 ("s", 2 H, Phthalimid-3-H), 8,69 ("d", J = 8 Hz, 2 H, Phthalimid-5-H).

### b) Copolymerisation

22,6 g (38,6 mmol) des oben unter a) beschriebenen 1,5-Bis-(4-(N-allyl-4-phthalimidcarbonyloxy)-naphthalins werden mit einem Lösungsmittelgemisch aus 500 ml wasserfreiem Toluol und 100 ml wasserfreiem Anisol vermischt und unter Argonatmosphäre auf 100°C erhitzt. Zu diesem Gemisch werden 33,0 g (40,5 mmol) des oben unter A beschriebenen α,ω-Dihydrogendocosamethylundecasiloxans und 3,6 ml (4,6 »mol) einer 1,27 · 10⁻³ molaren Lösung von Dicyclopentadien-Platindichlorid, dessen Herstellung in Beispiel 1 unter d) beschrieben ist, in Chloroform, zugetropft. Des weiteren wird wie in Beispiel 1 unter e) beschrieben verfahren. Man erhält 45,7 g (85 %) des erfindungsgemäßen Copolymers als schwach beige-farbene, transparente Folie.

Das Copolymer besitzt ein Gewichtsmittel M̅_{w} von 36300, ein Verhältnis von Gewichtsmittel M̅_{w} zu numerischem Mittel M̅ₙ von 1,93 und einen mittleren Polymerisationsgrad P̅_{w} von 26 mit folgender Wiederholungseinheit: 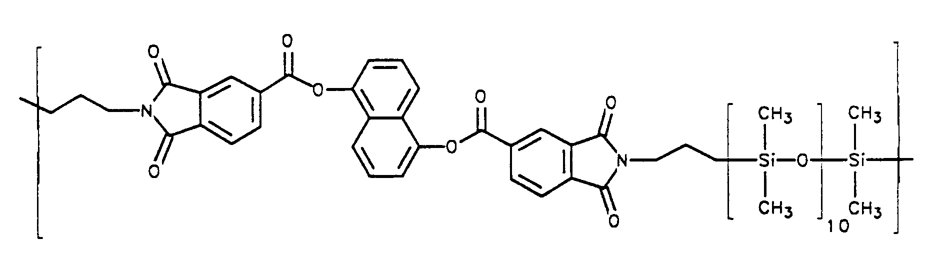
Das so erhaltene Estergruppen aufweisende Polyimidsiloxan hat zwei Glaspunkte bei -94 und 24°C. Die Zersetzungstemperatur beträgt 407°C unter Stickstoff-Atmosphäre und 383°C unter Luft.

Das erhaltene Estergruppen aufweisende Polyimidsiloxan hat bei 0°C eine Reißfestigkeit von 14,6 MPa und eine Reißdehnung von 459 % und bei 23°C eine Reißfestigkeit von 9,8 MPa und eine Reißdehnung von 596 %.

### 300 MHz-¹H-NMR-Spektrum (CDCl₃, innerer Standard CHCl₃, δ = 7,25)

- δ =: 0,05 (m, 66 H, -Si(CH₃)₂-O-), 0,59 (m, 4 H, Si-CH₂-), 1,73 (m, 4 H, Si-CH₂-CH₂-), 3,73 (t, J = 7 Hz, 4 H, N-CH₂-), 7,47 (d, J = 7 Hz, 2 H, Naphthalin-2,6-H oder -4,8-H), 7,56 (dd, J = 7; 7 Hz, Naphthalin-3-7-H), 7,86 (d, J = 7 Hz, 2 H, Naphthalin-4-8-H oder -2-6-H), 8,04 (d, J = 8 Hz, 2 H, Phthalimid-6-H), 8,66 ("d", J = 8 Hz, 2 H, Phthalimid-5-H), 8,76 ("s", 2 H, Phthalimid-3-H).

### Beispiel 12

### a) Herstellung von 3,3-Bis-(4-(N-allyl-4-phthalimidcarbonyloxy)-phenyl)-phthalid

Zu einem Gemisch aus 80,4 g (0,25 mol) Phenolphthalein und 72 ml (0,51 mol) Triethylamin in 500 ml wasserfreiem Tetrahydrofuran werden 137,3 g (0,55 mol) N-Allyl-4-phthalimidcarbonylchlorid, dessen Herstellung in Beispiel 1 unter b) beschrieben ist, gegeben, wobei die Innentemperatur auf 70°C ansteigt. Anschließend wird noch 7 Stunden unter Rückfluß auf 65°C erhitzt. Des weiteren wird wie in Beispiel 1 unter c) beschrieben verfahren. Man erhält 170,0 g (91 %) 3,3-Bis-(4-(N-allyl-4-phthalimidcarbonyloxy)-phenyl)-phthalid als farblose Kristalle.
Fp. 154°C (Toluol/Ethanol, 9:1)

### 300 MHz-¹H-NMR-Spektrum (CDCl₃)

- δ =: 4,33 (d, J = 7 Hz, 4 H, N-CH₂-), 5,23 (d, J = 10 Hz, 2 H, N-CH₂-CH=CHₐH_{b}), 5,27 (d, J = 16 Hz, 2 H, N-CH₂-CH=CHₐH_{b}), 5,90 (ddd, J = 16; 10; 7 Hz, 2 H, N-CH₂-CH=CH₂), 7,26 und 7,46 (2 m, AA'BB'-Spektrum, 8 H, 1,4-Phenylen), 7,62 (t, J = 8 Hz, 1 H, Phthalid-6-H), 7,63 (d, J = 8 Hz, 1 H, Phthalid-4-H), 7,77 (t, J = 8 Hz, 1 H, Phthalid-6-H), 7,98 (d, J = 8 Hz, 1 H, Phthalid-7-H), 8,00 (d, J = 8 Hz, 2 H, Phthalimid-6-H), 8,55 ("d", J = 8 Hz, 2 H, Phthalimid-5-H), 8,64 ("s", 2 H, Phthalimid-3-H).

### b) Copolymerisation

24,83 g (33,0 mmol) des oben unter a) beschriebenen 3,3-Bis-(4-(N-allyl-4-phthalimidcarbonyloxy)-phenyl)-phthalids werden mit 500 ml wasserfreiem Toluol vermischt und unter Argonatmosphäre auf 100°C erhitzt. Zu diesem Gemisch werden 26,86 g (33,0 mmol) des oben unter A beschriebenen α,ω-Dihydrogendocosamethylundecasiloxans und 2,6 ml (3,3 »mol) einer 1,27 · 10⁻³ molaren Lösung von Dicyclopentadien-Platindichlorid, dessen Herstellung in Beispiel 1 unter d) beschrieben ist, in Chloroform, zugetropft. Des weiteren wird wie in Beispiel 1 unter e) beschrieben verfahren. Man erhält 45,8 g (90 %) des erfindungsgemäßen Copolymers als nahezu farblose, transparente Folie.

Das Copolymer besitzt ein Gewichtsmittel M̅_{w} von 43200, ein Verhältnis von Gewichtsmittel M̅_{w} zu numerischem Mittel M̅ₙ von 2,10 und einen mittleren Polymerisationsgrad P̅_{w} von 28 mit folgender Wiederholungseinheit: 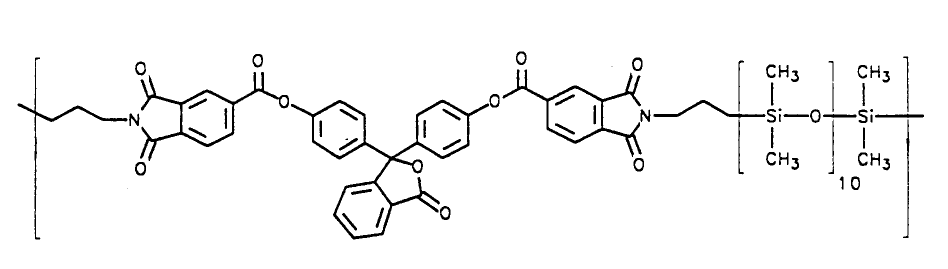
Das so erhaltene Estergruppen aufweisende Polyimidsiloxan hat zwei, durch DSC nachweisbare Glaspunkte bei -72°C und 60°C. Die Zersetzungstemperatur beträgt 385°C unter Stickstoff-Atmosphäre und 367°C unter Luft.

Das erhaltene Estergruppen aufweisende Polyimidsiloxan hat bei 0°C eine Reißfestigkeit von 18,2 MPa und eine Reißdehnung von 302 % und bei 23°C eine Reißfestigkeit von 16,0 MPa und eine Reißdehnung von 425 %.

### 300 MHz-¹H-NMR-Spektrum (CDCl₃, innerer Standard CHCl₃, δ = 7,25)

- δ =: 0,05 (m, 66 H, -Si(CH₃)₂-O-), 0,56 (m, 4 H, Si-CH₂-), 1,70 (m, 4 H, Si-CH₂-CH₂-), 3,68 (t, J = 7 Hz, 4 H, N-CH₂-), 7,23 und 7,44 (2 m, AA'BB'-Spektrum, 8 H, 1,4-Phenylen), 7,58 (t, J = 8 Hz, 1 H, Phthalid-6-H), 7,60 (d, J = 8 Hz, 1 H, Phthalid-4-H), 7,74 (t, J = 8 Hz, 1 H, Phthalid-6-H), 7,96 (2 d, J = 8 und 8 Hz, 2 H + 1 H, Phthalimid-6-H und Phthalid-7-H), 8,53 ("d, J = 8 Hz, 2 H, Phthalimid-5-H), 8,60 ("s", 2 H, Phthalimid-3-H).

### Beispiel 13

### a) Herstellung von 4,4'-Bis-(N-allyl-4-phthalimidcarbamoyl)-diphenylmethan

Zu einem Gemisch aus 19,8 g (0,10 mol) 4,4'-Methylendianilin und 31 ml (0,22 mol) Triethylamin in 400 ml wasserfreiem Toluol werden 55 g (0,22 mol) N-Allyl-4-phthalimidcarbonylchlorid, dessen Herstellung in Beispiel 1 unter b) beschrieben ist, gegeben. Des weiteren wird wie in Beispiel 1 unter c) beschrieben verfahren. Das Rohprodukt wird bei 70°C und 10 hPa getrocknet und zweimal aus Anisol umkristallisiert. Man erhält 57 g (91 %) 4,4'-Bis-(N-allyl-4-phthalimidcarbamoyl)-diphenylmethan als farblose Kristalle.
Fp. 288,8 °C (Anisol, DSC)

### 300 MHz-¹H-NMR-Spektrum (DMSO-d₆)

- δ =: 3,93 (s, 2 H, Ar-CH₂-AR), 4,23 (d, J = 7 Hz, 4 H, N-CH₂-), 5,15 (d, J = 10 Hz, 2 H, N-CH₂-CH=CHₐH_{b}), 5,16 (d, J = 16 Hz, 2 H, N-CH₂-CH=CHₐH_{b}), 5,90 (ddd, J = 16; 10; 7 Hz, 2 H, N-CH₂-CH=CH₂), 7,58 und 7,73 (2 m, AA'BB'-Spektrum, 8 H, Ar-CH₂-Ar), 8,03 (d, J = 8 Hz, 2 H, Phthalimid-6 H), 8,38 ("d", J = 8 Hz, 2 H, Phthalimid-5 H), 8,44 ("s", 2 H, Phthalimid-3-H).

### b) Copolymerisation

3,0 g (4,88 mmol) des oben unter a) beschriebenen 4,4'-Bis-(N-allyl-4-phthalimidcarbamoyl)-diphenylmethans werden mit 200 ml wasserfreiem Anisol vermischt und unter Argonatmosphäre auf 100°C erhitzt. Zu diesem Gemisch werden 7,7 g (5,3 mmol) α,ω-Dihydrogentetracontamethyleicosasiloxan und 1,13 ml (1,4 »mol) einer 1,27 · 10⁻³ molaren Lösung von Dicyclopentadien-Platindichlorid, dessen Herstellung in Beispiel 1 unter d) beschrieben ist, in Chloroform, zugetropft. Des weiteren wird wie in Beispiel 1 unter e) beschrieben verfahren. Man erhält 2,1 g (21 %) des erfindungsgemäßen Copolymers als schwach gelbe, transparente Folie.

Das Copolymer besitzt ein Gewichtsmittel M̅_{w} von 26300, ein Verhältnis von Gewichtsmittel M̅_{w} zu numerischem Mittel M̅ₙ von 5,69 und einen mittleren Polymerisationsgrad P̅_{w} von 13 mit folgender Wiederholungseinheit: 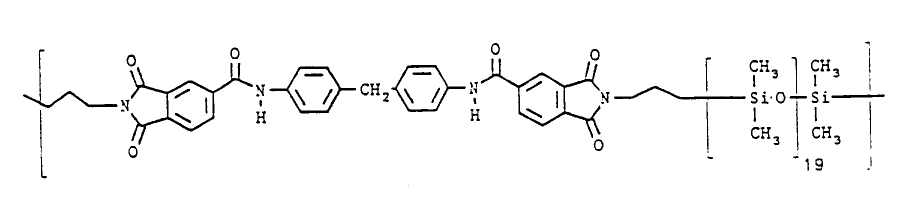
Das so erhaltene Amidgruppen aufweisende Polyimidsiloxan hat einen Glaspunkt bei -107°C und zeigt weiterhin im DSC-Diagramm zwei endotherme Peaks bei 168°C und 263°C.

### 300 MHz-¹H-NMR-Spektrum (CDCl₃, innerer Standard CHCl₃, δ = 7,25)

- δ =: 0,05 (m, 120 H, Si(CH₃)₂-O-), 0,54 (m, 4 H, Si-CH₂-), 1,67 (m, 4 H, Si-CH₂-CH₂-), 3,67 (t, J = 7 Hz, 4 H, N-CH₂-), 3,95 (s, 2 H, Ar-CH₂-Ar), 7,17 und 7,54 ( 2 m, AA'B'B'-Spektrum, Ar-CH₂-Ar), 7,90 (m, 2 H, Phthalimid-6-H), 8,25 (m, 4 H, Phthalimid-5-H und -3-H).

### Beispiel 14

18,5 g (28 mmol) des in Beispiel 5 unter a) beschriebenen 2,2-Bis-(4-(N-allyl-4-phthalimidcarbonyloxy)-phenyl)propans und 4,2 g (14 mmol) N,N'-Diallylpyromellitsäurediimid, hergestellt gemäß US-PS 4,212,880 (M.H. Fisher, Merck & Co. Inc.; ausgegeben am 16. Juli 1980) werden mit 200 ml wasserfreiem Toluol vermischt und unter Argonatmosphäre auf 100°C erhitzt. Zu diesem Gemisch werden 27,7 g (42 mmol) des nach der oben beschriebenen Arbeitsweise A hergestellten α,ω-Dihydrogenoctadecamethylnonasiloxans und 0,33 ml (4,2 »mol) einer 12,7 · 10⁻³ molaren Lösung von Dicyclopentadien-Platindichlorid, dessen Herstellung in Beispiel 1 unter d) beschrieben ist, in Chloroform, zugetropft. Des weiteren wird wie in Beispiel 1 unter e) beschrieben verfahren. Man erhält 44,5 g (89 %) des erfindungsgemäßen Copolymers als schwach gelbe, transparente Folie.

Das Copolymer besitzt ein Gewichtsmittel M̅_{w} von 146300 und ein Verhältnis von Gewichtsmittel M̅_{w} zu numerischem Mittel M̅ₙ von 2,11.

Das so erhaltene Estergruppen aufweisende Polyimidsiloxan hat zwei Glaspunkte bei -89°C und 7°C. Die Zersetzungstemperatur beträgt 398°C unter Stickstoff-Atmosphäre und 365°C unter Luft.

Das erhaltene Estergruppen aufweisende Polyimidsiloxan hat bei 0°C eine Reißfestigkeit von 28 MPa und eine Reißdehnung von 598 % und bei 23°C eine Reißfestigkeit von 20 MPa und eine Reißdehnung von 846 %.

### 300 MHz-¹H-NMR-Spektrum (CDCl₃, innerer Standard CHCl₃, δ = 7,25)

- δ =: 0,05 (m, 54 H, -Si(CH₃)₂-O-), 0,57 (m, 4 H, Si-CH₂-), 1,72 (m, 4 H, Si-CH₂-CH₂- und s, 2/3 x 6 H, -CH₃), 3,70 (t, J = 7 Hz, 2/3 x 4 H, N-CH₂-), 7,15 und 7,32 (AA'BB'-Spektrum, 2/3 x 8 H, -C₆H₄-), 7,97 (d, J = 8 Hz, 2/3 x 2 H, Trimellitsäureimid-6-H), 8,25 (s, 1/3 x 2 H, -C₆H₂-des Pyromellitsäureimids), 8,53 ("d", J = 8 Hz, 2/3 x 2 H, Trimellitsäureimid-5-H), 8,63 ("s", 2/3 x 2 H, Trimellitsäureimid-3-H).

## Patentansprüche

1. Polyimidsiloxane, die zusätzlich Ester- und/oder Amidgruppen aufweisen, dadurch gekennzeichnet, daß sie Einheiten der Formel 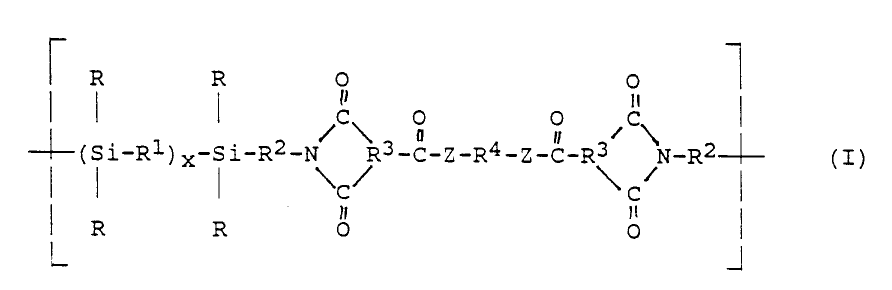 enthalten, worin
R gleich oder verschieden sein kann und einwertige, gegebenenfalls substituierte, von aliphatischer Mehrfachbindung freie, SiC-gebundene organische Reste bedeutet,
R¹ gleich oder verschieden sein kann und Sauerstoffatom oder zweiwertige, gegebenenfalls substituierte, von aliphatischer Mehrfachbindung freie SiC-gebundene organische Reste bedeutet,
R² gleich oder verschieden sein kann und zweiwertige, gegebenenfalls substituierte organische Reste bedeutet,
R³ gleich oder verschieden sein kann und dreiwertige, gegebenenfalls substituierte organische Reste bedeutet,
R⁴ gleich oder verschieden sein kann und zweiwertige, gegebenenfalls substituierte organische Reste bedeutet,
Z gleich oder verschieden sein kann und Sauerstoffatom oder einen Rest 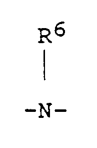 bedeutet, mit R⁶ gleich Wasserstoffatom oder einwertigem organischen Rest, und
x eine Zahl von 1 bis 200 ist,
mit der Maßgabe, daß in Formel (I) bis zu 20 Prozent der Diorganosiloxaneinheiten durch R₃SiO_{1/2}-, RSiO_{3/2}- und SiO_{4/2}-Einheiten ersetzt sein können, wobei R die vorstehend dafür angegebene Bedeutung hat.

2. Polyimidsiloxane, die zusätzlich Ester- und/oder Amidgruppen aufweisen, gemäß Anspruch 1, dadurch gekennzeichnet, daß Z gleich Sauerstoffatom ist.

3. Polyimidsiloxane, die zusätzlich Ester- und/oder Amidgruppen aufweisen, gemäß Anspruch 1 oder 2, dadurch gekennzeichnet, daß R¹ gleich Sauerstoffatom ist.

4. Polyimidsiloxane, die zusätzlich Ester- und/oder Amidgruppen aufweisen, nach einem oder mehreren der Ansprüche 1 bis 3, dadurch gekennzeichnet, daß R³ einen dreiwertigen, aromatischen Kohlenwasserstoffrest und R⁴ einen zweiwertigen, aromatischen Kohlenwasserstoffrest bedeutet.

5. Polyimidsiloxane, die zusätzlich Ester- und/oder Amidgruppen aufweisen, nach einem oder mehreren der Ansprüche 1 bis 4, dadurch gekennzeichnet, daß sie durchschnittlich aus 2 bis 500 Einheiten gemäß Formel (I) bestehen.

6. Polyimidsiloxane, die zusätzlich Ester- und/oder Amidgruppen aufweisen, nach einem oder mehreren der Ansprüche 1 bis 5, dadurch gekennzeichnet, daß der Gewichtsanteil der Organosiliciumverbindung im Ester- und/oder Amidgruppen aufweisenden Polyimidsiloxan zwischen 20 und 95 Gewichtsprozent liegt.

7. Verfahren zur Herstellung der Polyimidsiloxane, die zusätzlich Ester- und/oder Amidgruppen aufweisen, nach einem oder mehreren der Ansprüche 1 bis 6 durch Umsetzung von Ester- und/oder Amidgruppen aufweisenden α,ω-Dialkenylimiden der Formel 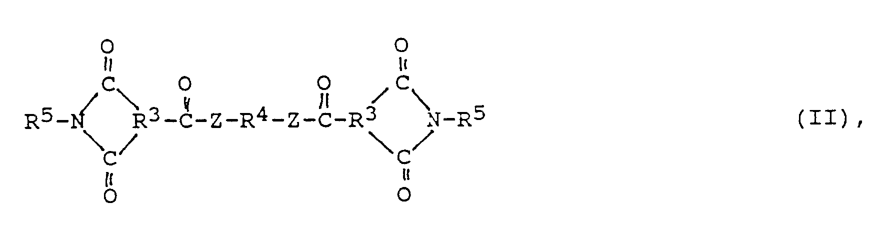 worin
R³ gleich oder verschieden sein kann und dreiwertige, gegebenenfalls substituierte organische Reste bedeutet,
R⁴ gleich oder verschieden sein kann und zweiwertige, gegebenenfalls substituierte organische Reste
Z gleich oder verschieden sein kann und Sauerstoffatom oder einen Rest 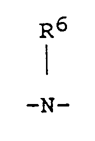 bedeutet, mit R⁶ gleich Wasserstoffatom oder einwertigem organischen Rest, und
R⁵ gleich oder verschieden sein kann und einen einwertigen, gegebenenfalls substituierten organischen Rest mit endständiger Kohlenstoff-Kohlenstoff-Doppelbindung bedeutet,
mit zwei Si-gebundene Wasserstoffatome aufweisender Organosiliciumverbindung der Formel 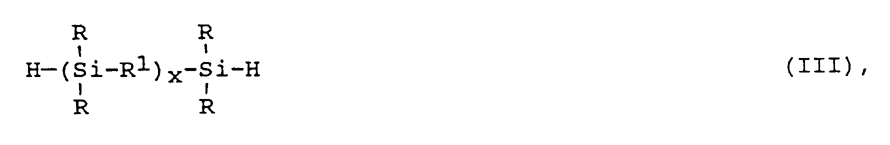 worin
R gleich oder verschieden sein kann und einwertige, gegebenenfalls substituierte, von aliphatischer Mehrfachbindung freie, SiC-gebundene organische Reste bedeutet,
R¹ gleich oder verschieden sein kann und Sauerstoffatom oder zweiwertige, gegebenenfalls substituierte, von aliphatischer Mehrfachbindung freie SiC-gebundene organische Reste bedeutet und
x eine Zahl von 1 bis 200 ist,
mit der Maßgabe, daß in Formel (III) bis zu 20 Prozent der Diorganosiloxaneinheiten durch R₃SiO_{1/2}-, RSiO_{3/2}- und SiO_{4/2}-Einheiten ersetzt sein können, wobei R die vorstehend dafür angegebene Bedeutung hat,
in Gegenwart eines die Anlagerung von Si-gebundenem Wasserstoff an aliphatische Mehrfachbindung fördernden Katalysators.

## Claims

1. Polyimide-siloxane which additionally contains ester and/or amide groups, characterized in that it contains units of tie formula 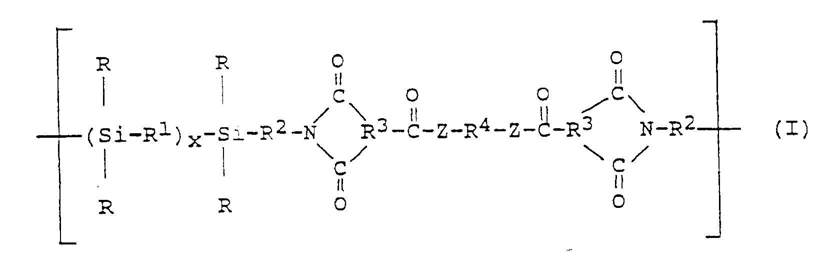 in which
R can be identical or different and denotes monovalent, optionally substituted SiC-bonded organic radicals which are free from aliphatic multiple bonds,
R¹ can be identical or different and denotes oxygen atoms or divalent, optionally substituted SiC-bonded organic radicals which are free from aliphatic multiple bonds,
R² can be identical or different and denote divalent, optionally substituted organic radicals,
R³ can be identical or different and denote trivalent, optionally substituted organic radicals,
R⁴ can be identical or different and denotes divalent, optionally substituted organic radicals,
Z can be identical or different and denotes oxygen atoms or radicals 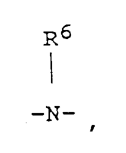 where R⁶ is a hydrogen atom or a monovalent organic radical, and
x denotes a number from 1 to 200,
with the proviso that in formula (I), up to 20% of the diorganosiloxane units can be replaced by R₃SiO_{1/2}, RSiO_{3/2} and SiO_{4/2} units, R having the meaning given above for this radical.

2. Polyimide-siloxane which additionally contains ester and/or amide groups according to Claim 1, characterized in that Z is an oxygen atom.

3. Polyimide-siloxane which additionally contains ester and/or amide groups according to Claim 1 or 2, characterized in that R¹ is an oxygen atom.

4. Polyimide-siloxane which additionally contains ester and/or amide groups according to one or more of Claims 1 to 3, characterized in that R³ denotes a trivalent aromatic hydrocarbon radical and R⁴ denotes a divalent aromatic hydrocarbon radical.

5. Polyimide-siloxane which additionally contains ester and/or amide groups according to one or more of Claims 1 to 4, characterized in that it consists of on average 2 to 500 units according to formula (I).

6. Polyimide-siloxane which additionally contains ester and/or amide groups according to one or more of Claims 1 to 5, characterized in that the weight content of the organosilicon compound in the polyimide-siloxane containing ester and/or amide groups is between 20 and 95% by weight.

7. Process for the preparation of a polyimide-siloxane which additionally contains ester and/or amide groups according to one or more of Claims 1 to 6 by reaction of an α,ω-dialkenylimide containing ester and/or amide groups of the formula 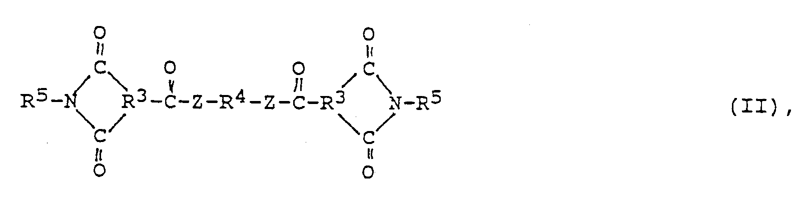 in which
R³ can be identical or different and denotes trivalent, optionally substituted organic radicals,
R⁴ can be identical or different and denotes divalent, optionally substituted organic radicals,
Z can be identical or different and denotes oxygen atoms or radicals 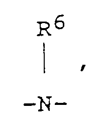 where R⁶ is a hydrogen atom or a monovalent organic radical, and
R⁵ can be identical or different and denotes a monovalent, optionally substituted organic radical with a terminal carbon-carbon double bond,
with an organosilicon compound containing two Si-bonded hydrogen atoms of the formula 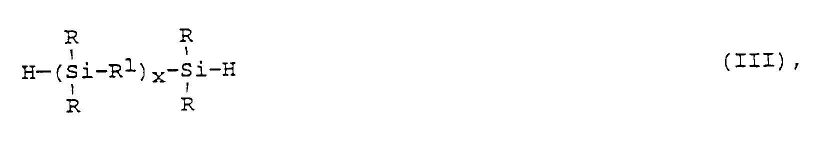 in which
R can be identical or different and denotes monovalent, optionally substituted SiC-bonded organic radicals which are free from aliphatic multiple bonds,
R¹ can be identical or different and denotes oxygen atoms or divalent, optionally substituted SiC-bonded organic radicals which are free from aliphatic multiple bonds and
x is a number from 1 to 200,
with the proviso that in formula (III), up to 20% of the diorganosiloxane units can be replaced by R₃SiO_{1/2}, RSiO_{3/2} and SiO_{4/2} units, R having the meaning given above for this radical,
in the presence of a catalyst which promotes the addition of Si-bonded hydrogen onto an aliphatic multiple bond.

## Revendications

1. Siloxanes de polyimides qui comportent des groupes supplémentaires ester et/ou amide, caractérisés en ce qu'ils comportent des unités de formule 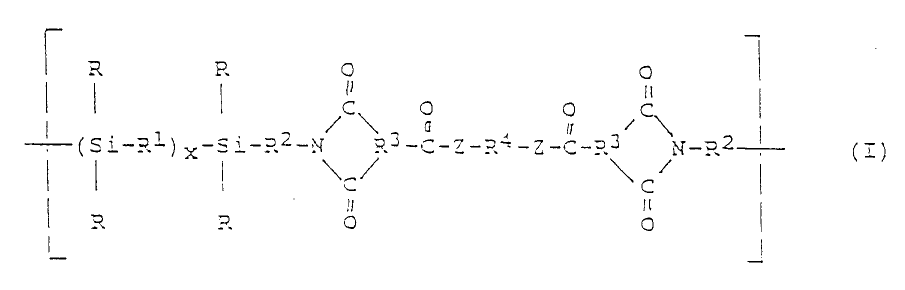 où
R peut être identique ou différent et représente des radicaux organiques monovalents, éventuellement substitués dépourvus de liaison multiple aliphatique, liés par SiC,
R¹ peut être identique ou différent et représente un atome d'oxygène ou des radicaux organiques bivalents, éventuellement subtitués, dépourvus de liaison multiple aliphatique, liés par SiC,
R² peut être identique ou différent et représente des radicaux organiques bivalents, éventuellement substitués
R³ peut être identique ou différent et représente des radicaux organiques trivalents, éventuellement substitués.
R⁴ peut être identique ou différent et représente des radicaux organiques bivalents éventuellement substitués,
Z peut être identique ou différent et représente un atome d'oxygène ou un radical 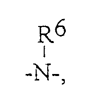 R⁶ étant un atome d'hydrogène ou un radical organique monovalent, et
x représente un nombre de 1 à 200,
à la condition que, dans la formule (I), jusqu'à 20 % des unités diorganosiloxane puissent être remplacées par des unités R₃SiO_{1/2}, RSiO_{3/2}, et SiO_{4/2}, où R a la signification donnée précédemment pour cela.

2. Siloxanes de polyimides qui comportent des groupes supplémentaires ester et/ou amide selon la revendication 1, caractérisés en ce que Z est un atome d'oxygène.

3. Siloxanes de polyimides qui comportent des groupes supplémentaires ester et/ou amide selon la revendication 1 ou 2, caractérisés en ce que R¹ est un atome d'oxygène.

4. Siloxanes de polyimides qui comportent des groupes supplémentaires ester et/ou amide selon une ou plusieurs des revendications 1 à 3, caractérisés en ce que R³ représente un radical hydrocarboné aromatique trivalent et R⁴ représente un radical hydrocarboné aromatique bivalent.

5. Siloxanes de polyimides qui comportent des groupes supplémentaires ester et/ou amide selon une ou plusieurs des revendications 1 à 4, caractérisés en ce qu'ils sont constitués en moyenne de 2 à 500 unités selon la formule (I).

6. Siloxanes de polyimides qui comportent des groupes supplémentaires ester et/ou amide selon une ou plusieurs des revendications 1 à 5, caractérisés en ce que la teneur en poids du composé organosilicique dans le siloxane de polyimide présentant des groupes ester et ou amide est entre 20 et 95 % en poids.

7. Procédé pour préparer les siloxanes de polyimides qui comportent des groupes supplémentaires ester et/ou amide selon une ou plusieurs des revendications 1 à 6, en faisant réagir des α,ω-dialcénylimides présentant des groupes ester et/ou amide de formule 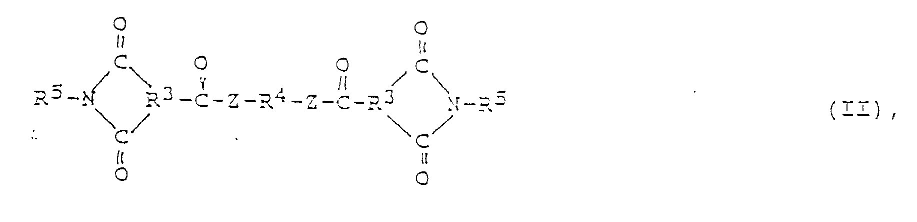 où
R³ peut être identique ou différent et représente des radicaux organiques trivalents, éventuellement substitués,
R⁴ peut être identique ou différent et représente des radicaux organiques bivalents éventuellement substitués,
Z peut être identique ou différent et représente un atome d'oxygène ou un radical 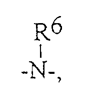 R⁶ étant un atome d'hydrogène ou un radical organique monovalent, et
R⁵ peut être identique ou différent et représente un radical organique monovalent, éventuellement substitué ayant une double liaison carbone-carbone terminale,
avec
un composé organosilicique comportant deux atomes d'hydrogène liés à Si de formule 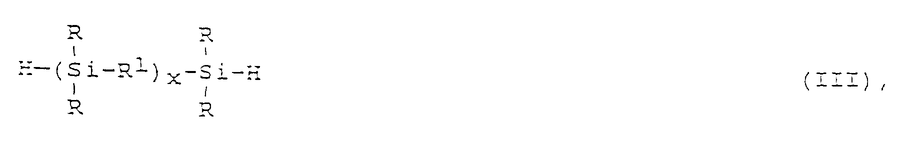 où
R peut être identique ou différent et représente des radicaux organiques monovalents, éventuellement substitués, dépourvus de liaison multiple aliphatique, liés par SiC,
R¹ peut être identique ou différent et représente un atome d'oxygène ou des radicaux organiques bivalents, éventuellement subtitués, dépourvus de liaison multiple aliphatique, liés par SiC, et
x représente un nombre de 1 à 200,
à la condition que, dans la formule (III), jusqu'à 20 % des unités diorganosiloxane puissent être remplacées par des unités R₃SiO_{1/2}, RSiO_{3/2}, et SiO_{4/2}, où R a la signification donnée précédemment pour cela,
en présence d'un catalyseur favorisant la fixation d'hydrogène lié à Si sur une liaison multiple aliphatique.
